# EUROPEAN PATENT APPLICATION

(11) **EP 4 610 624 A1**
(43) Date of publication of application: **03.09.2025**
(21) Application number: 24160644.1
(22) Date of filing: 29.02.2024
(51) Int. Cl.: G01N 11/00

(54) **TEST PLAQUE FOR VALIDATION OF INJECTION MOULDING MATERIAL RHEOLOGICAL CHARACTERISATION**

(71) Applicant: Sartorius Stedim Biotech GmbH, 37079 Göttingen (DE)
(72) Inventor: JONES, Neil, 37079 Göttingen (DE); OUIDA, Julien, 37079 Göttingen (DE)
(74) Representative: Müller-Boré & Partner Patentanwälte PartG mbB

(57) **Abstract**

The invention relates to a test specimen (1) for rheological testing of plastic products comprising a plate body (10) from a plastic material, said plate body (10) having a first major surface (102), a second major surface opposite to the first major surface (102) and a side surface (106) connecting the first and the second major surface (104) and at least one spatial feature (12A, 12B, 14A, 14B) arranged in or on the plate body (10), each spatial feature (12A, 12B, 14A, 14B) indicative of a defect occurring in the plastic products or a geometric feature of the plastic products. The invention relates further to methods and respective systems using the test specimen, including methods and systems for testing for testing of a plastic product, for validating a rheological data set or a model of a process for manufacturing of plastic products, for determining at least one property of a plastic product to be manufactured and for manufacturing a plastic product.

## Description

The invention relates to a test specimen for rheological testing of plastic products and to methods and respective systems using the test specimen, including methods and systems for testing of a plastic product, for validating a rheological data set or a model of a process for manufacturing of plastic products, for determining at least one property of a plastic product to be manufactured and for manufacturing a plastic product.

New plastic products produced by injection moulding often have design or material defects which might affect their functionality negatively. By means of simulation software (Digital Material Twin), best geometry and design as well as choice of material and thicknesses can be ideally predicted. However, such prediction is complex and suffers from lack of data on rheological characterization.

A rheological characterization of a polymer for injection moulding may be carried out by a rheometer, such as a capillary rheometer. However, in this method the measurement is typically carried out on a sample of unprocessed polymer, neglecting the influence of the plastification phase.

In order to generate data for rheological characterization, specific test plaques (specimens) may be used. Existing test plaques are in square format. However, since the plaques are substantially featureless, they do not enable obtaining of a full set of rheological data relevant to injection moulding and products produced by injection moulding. Further, test specimens for multiple uses according to ISO 3167 and for testing of plastics according to ISO 20753 are also known. Such test specimens cover specific uses for parts for tensile testing of anisotropy, but do not enable obtaining sufficient rheological data relevant to injection moulding and plastic products produced by injection moulding.

The present invention aims to alleviate or overcome the above technical problems.

To solve or alleviate at least one of the above technical problems, novel test specimens in form of test plaques or plates provided with at least one spatial feature are proposed. Further, methods and systems for testing of a plastic product, for validating a rheological data set or a model of a process for manufacturing of plastic products, for determining at least one property of a plastic product to be manufactured and for manufacturing a plastic product as defined in the appended independent claims are provided.

According to a first aspect there is provided a test specimen (test plaque) for rheological testing of plastic products comprising:
a plate body from a plastic material, said plate body having a first major surface, a second major surface opposite to the first major surface and a side surface connecting the first and the second major surface;
at least one spatial feature arranged in or on the plate body, each spatial feature indicative of a defect occurring in the plastic products and/or a geometric feature of the plastic products.

A "plate body" or a "plate form" within the present disclosure is a three-dimensional body, wherein the spatial dimension of the body measured in a first spatial direction (e.g., thickness direction) is substantially smaller than the spatial dimensions (e.g., width and length) of the body measured in the two spatial directions orthogonal to the first spatial direction. A plate body thus comprises two major surfaces (faces) and a side (peripheral) surface (face) connecting the two major surfaces. The plate body may be made in any suitable form, such as for example in a square or rectangular form.

The two major surfaces of the plate body may be substantially plane surfaces. In an embodiment, one of the major surfaces of the plate body may be a smooth surface and the other surface may be a structured surface having at least one spatial feature formed on and/or in it. It is also possible that both surfaces are structured surfaces, each having at least one spatial feature formed on and/or in it.

The two major surfaces may be arranged at a predetermined distance from each other. In an example, the two (e.g., substantially plane) major surfaces of the plate body may be arranged substantially parallel to each other. Thus, the thickness of the plate body may be substantially uniform. For example, the thickness of the plate body may be a predetermined thickness, which may be indicative of the expected thicknesses in the product to be tested. Exemplary thicknesses (e.g., measured at portions of the plate body that are free from spatial features and/or sensor zones) are 1 mm, 4 mm, 7 mm. Other thicknesses may be selected, e.g., to better account for the typical wall thicknesses of plastic products to be tested, produced for example by injection moulding.

The thickness of the plate body need not be uniform, but may vary, e.g., stepwise or continuously. In an example, the plate body may be composed of or may comprise a plurality of zones with different thicknesses. Each of the zones (plate zones) may have two major, substantially plane surfaces (faces) that are parallel to each other. Accordingly, the thickness of each of the zones (e.g., measured at portions that are free from spatial features and/or sensor zones, etc.) may be substantially uniform. In an example, the plate body may have three plate zones with different (predetermined) thicknesses that may be indicative of the expected thicknesses in the product to be tested. The thicknesses of the three plate zones may be for example 1 mm, 4 mm and 7 mm. Other thicknesses are also possible. The zones may be arranged adjacent to each other. Accordingly, the first and the second major surfaces of the plate body may correspond to combined surfaces composed respectively of the first major surfaces or the second major surfaces of the plurality of (plate) zones. One of the major surfaces of the plate body (e.g., the second major surface) may be a continuous (smooth) plane/flat surface (flat face). The other one of the major surfaces may be a surface, in which e.g., steps or step portions where two adjacent plate zones with different thicknesses meet are formed. Other arrangements are also possible.

The terms "parallel", "orthogonal", "same", "constant", "equal", "square", "rectangular", "circular", "plane", "stepwise", etc. are used in the context of the present disclosure to mean within allowable tolerance ranges (e.g., as determined by typical manufacturing and/or measurement errors). In other words, the above terms relate to "nominal" parameters. Similarly, the specific values within the context of the present disclosure are used in the sense of "nominal" values, with possible deviations due to manufacturing and/or measurement errors. Further, the terms "square", "rectangular", etc. encompass both forms with sharp and forms with rounded edges.

The plate body may be made of a solid plastic material corresponding to the plastic material of a plastic product that is to be tested, wherein one or more holes, recesses, steps, projections and/or other spatial features may be formed on at least one major surface and optionally on the side surface of the plate body. For example, the at least one spatial feature may be regarded as a defect deliberately introduced into the test specimen, wherein the deliberately introduced defect is indicative of a (e.g., typical, expected, etc.) defect occurring in the plastic products. The defect may be due for example to material flow separation, re-joining such as rejoining by welding, etc. The at least one spatial feature may also be indicative of a (e.g., typical, expected) geometric feature of the plastic products (e.g., due to the design and/or manufacturing process of the plastic products) and may enable obtaining information of properties of a plastic product to be tested that are due to the provision of the respective geometric feature. Exemplary geometric features are wall structures, openings, weldlines, thickness variations, etc. The term "indicative" includes within the context of the present disclosure the terms representative of, corresponding to, related to, etc. For example, the at least one spatial feature may be a feature that encourages sinkage, weldline formation or thickness changes. By the provision of the at least one spatial feature it is possible to obtain more versatile and accurate information on the properties of a plastic product to be tested, without having to actually manufacture the plastic product or a prototype of the plastic product. Further, the test specimens enable efficiently obtaining information regarding a variety of plastic products, for example different plastic materials, different designs of a plastic product (for example different wall thicknesses, different sizes of certain elements, different arrangement of certain elements, etc.) and/or plastic products manufactured under different manufacturing conditions (e.g., different temperatures, pressures, flow rates, residence time, etc.).

The test specimen may be manufactured by the same or similar manufacturing process as the plastic product or products for which test data is to be acquired. For example, the test specimen may be manufactured by a manufacturing method configured based on a predetermined set of manufacturing parameters that may match the manufacturing parameters of the manufacturing process for the plastic product(s) for which test data is to be acquired. The manufacturing process parameters (or shortly process parameters) may for example include one or more of temperature, flow rate, screw rotation speed, residence time, geometry of the system, etc.

In an example, the test specimen may be manufactured by injection moulding. However, the test specimen may also be manufactured by other suitable methods, such as extrusion, coating, pressing, etc. Different test specimens obtained by manufacturing processes (such as an injection moulding processes, etc.) configured with different manufacturing process parameters may be produced and subsequently tested to obtain rheological test data corresponding to the different manufacturing process parameters.

The test specimen may be manufactured according to a predetermined design, wherein the tolerances (i.e., the deviations from predetermined, nominal dimensions) may be kept low, in order to ensure correctness and/or repeatability of the measurements. For example, the tolerances with respect to a target value such as thickness, size, area, length etc. may be in a range from ±0.25% to ±5%, more specifically in a range from ±0.25% to ±3%, even more specifically in a range from ±0.25% to 1% of the target value. For example, if the test specimen has a target side length of 30 mm, the expected deviations from the target value may be for example from ±75 µm to ±1.5 mm, more specifically from ±75 µm to ±0.9 mm, even more specifically from ±75 µm to ±0.3 mm. The tolerances with respect to specific angles (e.g. for spatial structures such as ribs, holes, etc.) may be in a range from ±0.25 to ±5 degrees, more specifically in a range from ±0.25 to ±3 degrees, further specifically in a range from ±0.25 to ±1 degree. Further, an injection moulded test specimen or plastic product may exhibit a taper applied to the vertical walls of the injection-moulded test specimen or plastic product, in order to assist with releasing the injection moulded test specimen or plastic product from the mould. The "taper" is referred to as "draft angle" and is typically a required feature of injection-moulded custom parts. The above tolerances apply to the draft angle and any other angles formed by parts of the test specimen or the plastic product.

The spatial features may be of various types and may exhibit various forms and sizes.

For example, the at least one spatial feature may be at least one of the following types of spatial features:
a rib extending from one of the major surfaces (e.g., first major surface) of the plate body
a through opening formed in the plate body;
a recess formed in one of the major surfaces of the (e.g., first major surface) of the plate body;
a projection extending from one of the major surfaces (e.g., first major surface) of the plate body.

In an example, the at least one spatial feature may be arranged only on one of the major surfaces of the plate body (for example the first major surface), and the second major surface of the plate body may be a substantially smooth surface, except for example at areas in which through openings are formed. It is also possible to form the spatial features, such as ribs, recesses, projections, etc. on both major surfaces of the plate body. Further, it is possible to form at least one spatial feature, such as a projection, a recess, a rib, etc., on the peripheral surface of the test specimen.

The above spatial features may be indicative of different defects occurring in the plastic products and/or different geometric feature of the plastic products.

For example, a spatial feature in form of a rib may be indicative of different wall structures (e.g., with different thicknesses) and may introduce sinkage defects, e.g., in form of sinkage marks, within the test specimen, which may then be measured, for example to determine sinkage depth, width, etc. These properties may, for example, be compared to a simulated Digital Twin.

A spatial feature in form of a through opening may be indicative of a disruptive feature disrupting the flow of material during the manufacturing process of the plastic product. For example, a mould for the plastic product may exhibit a pin or other obstructive feature at a position corresponding to the through opening, which impedes the flow of material during the moulding of the plastic product and the test specimen. The pin or other obstructive feature of the mould for forming a through opening may, for example, be employed to develop weldlines within the flow field during the moulding. These may be used to deliberately develop a weldline defect or weldline defects within the test specimen, of which the through opening is indicative. The introduced weldline defect(s) may be compared to a simulated Digital Twin. In addition of alternatively, the through opening may also be indicative of a respective spatial feature (through opening) of the plastic product to be tested.

The through opening of the test specimen may have various sizes and/or cross-sections. The size of the through opening (e.g., a side length and/or diameter) may be selected such as to allow sufficient amount of material to flow past the respective obstructive feature in the mould. For example, the size of the through opening may be in the range of about 50 µm to about tens of millimeters, depending on the size of the test specimen (and accordingly of the tested product) and may be up to 20% of a side length of the test specimen. The cross-sectional shape of the through opening may be any shape, for example square, rectangular, oval, circular, triangular, trapezoidal, pentagonal, hexagonal, etc.

Instead of a through opening, a recess formed in at least one of the major surfaces may be indicative of a disruptive feature disrupting the flow of material during the manufacturing process of the plastic product and/or a spatial feature of the plastic product to be tested. With respect to the cross-sectional size and/or form of the recess, the above description with respect to a through opening apply respectively. The depth of the recess may be suitably selected to reflect the disruption of the flow of material during the manufacturing process of the plastic product.

A spatial feature in form of a recess and/or a projection (e.g., other than a rib) formed in or on one of the major surfaces of the (e.g., first major surface) of the plate body may be indicative of a thickness variation in a plastic product and/or may deliberately introduce a thickness defect within the test specimen. The recess and/or projection may have various forms and/or sizes that may match the form and/or sizes of defects and/or geometric features in the tested product(s).

Other spatial features may be introduced, for example to account for defects due to thickness changes, material flow separation and re-joining or to account for other geometric effects and/or features of plastic products.

In an example, the test specimen may comprise a plurality of spatial features of a particular type and/or a plurality of spatial features of different types. The plurality of features of a specific type may form a group and there may be a plurality of groups of features of different types.

For example, the test specimen may comprise at least one first group comprising at least two spatial features, the at least two spatial features being ribs extending from the first major surface of the plate body. Each of the ribs may be extend substantially perpendicular to the first major surface. The ribs may have an elongated form and may be from the same plastic material as the plate body. At least two of the ribs may be arranged substantially parallel to each other, such that the lines coinciding with the length direction of each rib are parallel to each other. As described above, the ribs may introduce sinkage marks, for example on the second major surface, which may be measured to obtain sinkage related measurement data and respective material properties.

The thickness of each of the ribs in the first group may be a predetermined fraction of the thickness of the plate body measured at a position of the plate body where the respective rib is arranged. In other words, the thickness of each of the ribs may be a predetermined fraction of the thickness of the portion of the plate body to which the respective rib is connected. As an example, if a rib extends from (i.e., is connected to) a 4 mm thick portion of the plate body, a 50% thickness rib would have 2 mm thickness, a 75% thickness rib would have a 3 mm thickness, a 100% thickness rib would have a 4 mm thickness and a 125% thickness rib would have a 5 mm thickness.

For example, the plate body may have a substantially uniform thickness and the thickness of the rib may be set to 75% of the plate body's thickness. In case the plate body has plate zones with different thicknesses, the thickness of the respective rib may be set for example to 75% of the thickness of the plate body in the plate zone where the rib is arranged.

In an example, at least two of the ribs in the first group may have different thicknesses that may be set for example to predetermined fractions (e.g., 75%, 100% 125% and 150%) of the thickness of the plate body. Other fractions are also possible. The thickness at the thinnest section of each rib (typically at the tip of the rib) may for example be set such as to not be under a predetermined lower limit when draft angle is included. For example, the thickness at the thinnest portion may be at least 0.25 mm, when draft angle is included.

The height of the ribs (measured in a direction orthogonal to the surface of the plate body from which the respective rib extends, such as the first major surface) may be the same or may differ for at least two of the ribs. For example, the height may be at least 5 mm more specifically at least 7 mm, further specifically at least 9 mm. Similarly, the length of the ribs may be the same or differ for at least two of the ribs- For example, the length of a rib may be at least 1 time the rib thickness or at least 10 mm, whichever is greater. The length of a rib may be for example up to 30 mm considering the clearances needed to minimize influence of each feature on the other features in the test specimen. The dimensions of the ribs are exemplary and may differ, depending on the dimension of the test specimen. For example, the at least one rib may be configured and arranged such as to provide a minimum level of clearance to all other features of a test specimen (such as a test specimen of 10 mm for example).

The ribs in the first group may be arranged in different patterns. For example, the ribs may be arranged parallel and/or orthogonal to a side of the first major surface of the plate body. In an example, the at least one first group of spatial features (ribs) may comprise:
a first subgroup comprising at least two ribs extending from the first major surface of the plate body and arranged substantially parallel to each other; and
a second subgroup comprising at least two ribs extending from the first major surface of the plate body and arranged substantially parallel to each other and orthogonal to the ribs on the first subgroup.

For example, the ribs in the first subgroup may be arranged in a longitudinal direction and the ribs in the second subgroup may be arranged in a transverse direction and vice versa.

The longitudinal direction may correspond to the direction of material feed or material flow during the process of manufacturing of the test specimen. In the case of injection moulding, the longitudinal direction may correspond to the direction of flow of the molten plastic material (e.g., resin) as the material is being injected into the cavity within the mould used to form the test specimen. The term "material flow" refers to a direction of filling of the mould, wherein as the molten material progresses through the mould, the flow is in line with this direction. The "material flow" thus may also denote the "melt front", i.e., the leading edge of the molten material path as it fills the part.

The test specimen may have one side (material feed side or entry side/face), which is on the side of the material feed. The term "material feed" is commonly referred to as a gate. It is the area on the top of the test specimen where the material is forced (e.g., under pressure) into the cavity of the mould used to form the test specimen.

In an example, each sub-group may consist of 4 ribs having thicknesses at predetermined different fractions (e.g., 75%, 100% 125% and 150%) of the plate body thickness. The ribs in each sub-group may be arranged in a matrix form. Each sub-group may comprise less (e.g., two or three) or more than 4 ribs, arranged for example in a matrix form or in other suitable forms (such as star-form, etc.).

By employing a plurality of ribs arranged for example at different points of the test specimen and in different directions of the test specimen (for example with respect to an entry face of the test specimen), it is possible to obtain more accurate and/or complete measurement information across the test specimen.

In addition to or as an alternative to the first group of spatial features of a first type (e.g., ribs), the test specimen may comprise a second group of spatial features of different type than the first group. For example, the spatial features in the second group may be through openings formed in the plate body as described above, wherein the through openings have different cross-sectional sizes and/or forms.

In an example, the through openings may comprise at least one first through opening and at least one second through opening having different cross-section forms, such as for example at least one cylindrical through opening (first through opening) and at least one second cuboid through opening (second through opening). In another example, the through openings may comprise a plurality of through openings with the same cross-section forms and different sizes, such as for example at least two cylindrical through openings having different diameters, at least two cuboidal through opening having different side lengths, etc. In an example, both the cross-sectional forms and sizes may differ among the through openings.

As described above, each through opening may be indicative of a weldline defect within the test specimen. By using a plurality of through openings with different cross-sectional sizes and/or cross-sectional forms it is possible to better asses different weldline defects that may occur in the tested product.

A cylindrical through opening in the contest of the present disclosure encompasses through openings with a circular and an elliptical cross section of the through opening with a plane parallel to one of the major surfaces of the plate body.

A cuboid through opening in the context of the present disclosure encompasses openings with a square and a rectangular cross section of the through opening with a plane parallel to one of the major surfaces of the plate body, wherein the cross-section edges may be sharp or rounded. In an example, the first cylindrical through opening has a circular cross-section and the second through opening has a square cross section.

The through openings may be arranged such that the line (opening connection line) connecting i) the center of a cross-section of the first through opening with the first major surface of the plate body and ii) the center of a cross-section of the second through opening with the first major surface of the plate body is parallel to one side of the first major surface of the plate body. The opening connection line may be parallel to the longitudinal direction, i.e., to the direction of material flow. It is possible to arrange the through openings in a different manner. Further, more than two through openings and/or through openings of other forms than cylindrical or cuboid may be provided.

The size and/or form of the through opening may be suitably selected, for example in view of obtaining rheological measurements of weldline defects in tested plastic product(s). Further, the size and/or form and/or arrangement of the through openings may be selected such as to maintain a sufficient clearance to avoid influence of other spatial features on the test plague. For example, the diameter and/or the side length of a through opening (measured in a cross-section of the respective through opening with the one of the major surfaces, such as the first major surface, of the plate body) may be from a millimeter up to several millimeters, tens of millimeters or hundreds of millimeters, depending on the size of the test specimen and/or the plastic product to be tested. For example, moulded plastic products from many different sources may have holes in them of between 2 mm to 160 mm, e.g., a strainer to a bumper with fog light on a car. The sizes of the through openings may be accordingly selected. The lower limit for the size (e.g., diameter and/or the side length) of the through opening may be such as to enable the material flowing around an obstructive feature (such as a pin) of the mould used to form the test specimen to produce a weldline which is of a length which is measurable without magnification. For example, the lower limit for the size (e.g., diameter and/or the side length) of the through opening may be in the millimeter range, for example 3 mm.

The test specimen may further comprise at least one extension tab extending from and connected to one side of the side surface of the plate body, the at least one extension tab having a plate form having with a substantially uniform thickness. The side of the side surface of the plate body from which the at least one extension tabs extends, may be the side opposite to feed, i.e., the side opposite to the material feed/entry side of the test specimen.

The at least one extension tab may be formed from a solid body of plastic material, for example the same plastic material as the plate body.

Similar to the plate body of the test specimen described above, the at least one extension tab has two substantially parallel major surfaces and a side (peripheral) surface connecting the two major surfaces. The two major surfaces of the extension tab may be substantially smooth surfaces. The form of the at least one extension tab may be suitably selected. For example, the at least one extension tab may have a substantially rectangular form. One side of the side surface of the extension tab may be connected to a side surface of the plate body.

The thickness of each extension tab may be set for example to a fraction (e.g., 75%) of the thickness of the portion of the plate body to which the respective extension tab is connected. For example, if an extension tab is connected to a 4mm thick section of the plate body, a 50% thickness tab would have 2 mm thickness, a 75% thickness tab would have thickness of 3mm.

If the plate body of the test specimen has a substantially uniform thickness, the thickness of each respective tab may be set at a fraction of (e.g., 75%) of this thickness. The fraction (ratio) may be is maintained at thicker and thinner sized plates.

The test specimen may comprise a plurality (i.e., at least two) extension tabs. For example, the test specimen may comprise two extension tabs extending from the same side surface of the plate body and arranged at a distance of each other. The two extension tabs may have the same size and form (e.g., rectangular form).

The two extension tabs may be arranged parallel to each other, i.e., side surfaces of the two extension tabs may be parallel to each other, so that the distance between the extension tabs (measured from the side surface of one extension tab to the side surface of the other extension tab) is substantially constant. The thicknesses of the two extension tabs may be set at different fractions of the thickness of the plate body (or the portion of the plate body from to which the extension tabs are connected). In an example, the thicknesses of the two extension tabs may be set for example at 50% and 75% of the plate body thickness, respectively.

By the provision of the extension tabs, it is possible to obtain measurement data relating to thickness variations that may occur in the tested product and changes in the properties of the tested product due to thickness variations, including for example changed shrinkage, shrinkage rate, etc., and/or a final deformed geometry of the tested product.

In addition or alternatively, the test specimen may comprise further spatial features or groups of spatial features (each group including at least two spatial features of a particular type) may be provided. Examples of such spatial features are recesses, projections, etc.

The test specimen may comprise a plurality of measurement points or zones for acquisition of data for determining at least one rheological material property, wherein the at least one rheological material property optionally includes one or more of the following properties: thickness change (with respect to a nominal thickness), directional differential shrinkage, shrinkage rate, geometric warpage, sinkage size, location and/or depth. Within the context of the present disclosure the measurement points or zones will be also referred to as dimensional measurement features. The plurality of measurement points or zones may be arranged such as to obtain measurement data regarding one or more of the above properties across the test specimen and preferably in the various planes and orientations (e.g., shrinkage at a particular point or direction, thickness, etc.). The so obtained data may be compared to data obtained by performing virtual measurement to a Digital Twin, as further described below.

The spatial position of the measurement points or zones may be predetermined and stored in a suitable form (e.g. in a file, database, etc.). Based on the stored data, the spatial position of each of the measurement points or zones of the test specimen may be determined. It is also possible to indicate the spatial position of at least some of the measurement points by a suitable indicator, such as permanent or non-permanent markers, such as paint, dents or recesses, or other visual and/or tactile indicators. Thus. the necessary measurements may be carried out easily and reliably.

The test specimen may comprise at least one sensor indicator, each sensor indicator identifying a set of measurement data indicative of at least one physical property acquired during manufacturing of the test specimen by a sensor arranged at a position corresponding to the spatial position of the respective sensor indicator. Within the context of the present disclosure the sensor indicators are also referred to as sensor zones. The at least one sensor indicator may be arranged on one of the major surfaces of the plate body, for example on the second major surface of the plate body opposite to the first major surface on or in which at least one spatial feature is provided.

For example, a mould for forming the test specimen may have at least one embedded sensor, wherein the at least one sensor may acquire measurement data of at least one property during the moulding process, such as pressure or temperature. The respective sensor indicator of the test specimen may thus be formed by an imprint of the embedded sensor on the moulded product. In addition or alternatively, the at least one sensor indicator may be formed by other permanent or non-permanent markers, such as paint, dents, recess, or another visual indicator. Thus, it is possible to quickly and reliably associate sensor data acquired during the manufacturing process (e.g., during the moulding of the test specimen) with the respective spatial point at which this data is obtained.

The sensor indicators mounted in the respective sensor zones may be provided independently of the at least one spatial feature and/or measurement indicators described above in connection with the first aspect and examples thereof.

The at least one sensor may allow the acquisition of data indicative of a physical property or properties (such as for example temperature, pressure and/or their patterns) during the manufacturing process of the test specimen, which may be associated with material properties of the test specimen (and the respective tested product), such as for example directional differential shrinkage, geometric warpage caused by differential shrinkage, sinkage size, location and depth, etc. This may greatly improve the digitalization of plastic materials and may provide important information relevant to the inclusion of processing materials into digitally consistent and connected value chains. The obtained sensor data may, for example, be used for a validation of injection moulding rheological datasets by using a virtual model of the real-life process and equipment. The obtained sensor data may also be used for a validation of the virtual model of the real-life process and equipment and/or for predicting properties of plastic products made from the same plastic material as the test specimen and/or for predicting and/or setting properties of the manufacturing process and/or equipment.

In an embodiment, a mould for forming the test specimen may be equipped with one or more temperature sensors and one or more pressure sensors. The at least one temperature sensor and/or at least one pressure sensor may be arranged on one of the major surfaces of the cavity of the mould at a position corresponding to a position on the plate body of the test specimen and/or extension tab(s) of the test specimen.

The at least one temperature sensor and/or at least one pressure sensor may be configured to measure temperature or pressure, respectively. Optionally, the at least one sensor may be configured to record the measurements in a suitable data storage (that may be a part of the respective sensor itself or may be external to the sensor(s)) and/or to make the measurements available (for example by transmitting, allowing access, etc.) to a measurement data collection and/or processing device. The at least one sensor indicator on the test specimen may enable association of the stored sets of data obtained by a respective sensor arranged at a spatial position corresponding to the spatial position of the respective sensor indicator.

In an example, there may be a plurality of temperature sensors and/or a plurality of pressure sensors arranged at strategic points throughout the flow front, in order for example to allow for the process to be matched for both pressure and temperature profiles measurements which can be taken. The pressure and/or temperature profiles measured may be related to or associated with rheological properties obtained based on measurements of the manufactured test specimen, such as directional differential shrinkage, geometric warpage caused by differential shrinkage, sinkage size, location and depth.

Exemplary temperature sensors include, but are not limited to, bi-metallic thermocouples. Exemplary pressure sensors include, but are not limited to, piezoelectric or piezoresistive sensors.

The at least one sensor may be configured to monitor physical properties (such as temperature and/or pressure) of the manufacturing process (for example the temperature and/or pressure of the plastic material being forced into the cavity of the mould for forming the test specimen) constantly or intermittently (for example during some intervals or at specific times) and obtain respective measurements. The respective measurements may be stored in the sensor or in external data storage (which may be a part of a control unit). The sensors may be configured to detect the temperature and/or pressure (or their changes) and to record the respective measurement along with a time stamp at which the measurement occurs after a cycle start. The cycle start is a given step of the process when a repetitive cycle re-starts. In the case of injection moulding, this is typically the start of a "Mould Closing" phase of the cycle. The time stamp may be also generated and associated to the respective measurement by a measurement data collecting device. The data may be recorded as a temperature or pressure vs. time data table which can be exported from the sensor and/or the measurement data collecting device and/or the control unit and presented graphically if required. Thus, it may be possible to determine pressure and/or temperature change patterns, filling patterns, weldline creation patterns, etc., for example as a function of the time.

The test specimen may comprise a plurality of sensor indicators, said plurality of sensor zones including:
a first group of sensor indicators arranged along a substantially straight line parallel to a first side of the plate body; and/or
a second group of sensor indicators arranged along a substantially straight line parallel to a second side of the plate body orthogonal to the first side.

Some of the sensor indicators may belong to both the first and the second groups of sensor indicators. The first side may correspond to a flow entry side and the second side may be a side orthogonal to the flow entry side.

The form (e.g., a mould) for forming the test specimen may exhibit a plurality of sensors including a first group of sensors arranged at positions of the form (e.g., mould) corresponding to the positions of the first group of sensor indicators, and a second group of sensors arranged at positions of the form (e.g., mould) corresponding to the positions of the second group of sensor indicators.

Thus, it is possible to obtain information on changes of at least one physical property (such as a pressure and/or temperature changes) in a longitudinal direction (that be parallel to the direction of the material flow) and/or in a transversal direction orthogonal to the longitudinal direction at a plurality of strategic points of the mould for forming the test specimen. This enables an improved digitalization of the manufacturing process.

A second aspect relates to a kit of test specimens according to the above described first aspect and examples thereof, wherein the test specimens in the kit differ from each other by the thicknesses of the plate body and/or by at least one spatial feature. For example, the kit of test specimens may comprise a plurality of test specimens with differing thicknesses of the plate body, wherein the type and/or arrangement of the at least one spatial feature is/are the same for all test specimens in the kit.

The above described test specimen and a kit of test specimens may be used for one or more of the following technical applications and/or may provide one or more of the following advantageous technical effects:
By the provision of the test specimens and the kit of test specimens described above, each test specimen exhibiting at least one spatial feature and/or being equippable with at least one sensor, it is possible to acquire quickly and efficiently more accurate data indicative of material properties of a wide variety of plastic products manufactured from the same plastic material as the test specimen. These properties include, but are not limited to, one or more of the following properties: directional differential shrinkage, geometric warpage caused by differential shrinkage, sinkage size, location and depth. This may enable a more precise and efficient prediction of the properties of a plastic product to be produced and greatly improves the design and manufacture of high quality plastic products. At the same time, the costs and/or time associated with manufacturing and testing of prototypes of the plastic products may be greatly reduced.

Further, the acquisition of more accurate data indicative of the material properties of a wide variety of plastic product may enable more efficient and precise digitalization of various plastic materials at reduced costs and/or time. Through this digitalization of materials, important information may be obtained which facilitates the inclusion of processing materials into digitally consistent and connected value chains.

In particular, a creation of an appropriate materials data space, in which relevant specific material information can be digitally managed, automatically accessed and reconstructed with respect to their properties and operation conditions may be regarded as a key aspect for a successful plastic product manufacturing. For example, the materials data space is typically a precondition for an integration of materials into digitally connected systems. Digital material twins, reconstructed from the materials data space by the means of data analysis tools and material models, enable optimized or even ideal designing of new plastic products as well as a transfer of both temporally and locally varying material properties along the product life cycle. Managing the efficiency of production, manufacturing and operating processes can be vastly improved through digital workflows.

An appropriate materials data space can be built up and/or optimized or updated by using the above described test specimen and a kit of test specimen, which have a novel design, which allows a comprehensive material rheological characterization specially matched to the conditions of an injection moulding process.

Further, the measurement data obtained by using the above described test specimen and kit of test specimens may be used in a validation tool for rheological characterizations of materials used in the injection moulding process. For example, the measurement data may be used for validation of injection moulding rheological datasets by using a virtual model of the real-life process and equipment. In particular, exemplary test specimens (such as comprised in the above described kit of test specimens) may represent many of the potential thicknesses of material to be used in application and then in subsequent simulation of the exact same processing conditions to allow direct side-by-side comparison and validation of the Digital Material Twin dataset.

A third aspect relates to a method for testing of a plastic product, comprising
obtaining a test specimen or a model of the test specimen according to any one of the above described aspect and examples, wherein the test specimen is of the same plastic material as the tested plastic product and is optionally manufactured according to a manufacturing process having the same process parameters as the tested plastic product;
performing a measurement of at least one rheological property of the test specimen, thereby obtaining a set of measurement data and/or performing a virtual measurement of at least one rheological property using the model of the test specimen, thereby obtaining a set of virtual measurement data; and
determining at least one property of the tested plastic product based on the obtained set of measurement data and/or set of virtual measurement data.

In case of a real test specimen, the measurement (real-world measurement) may be performed by a suitable rheometer. Exemplary rheometers include, but are not limited to, capillary rheometers or viscometers.

The step of obtaining the test specimen may comprise manufacturing the test specimen (for example by injection moulding, extrusion, coating, pressing or another known process for manufacturing plastic products) and optionally providing at least one sensor to the manufactured test specimen. In case of already manufactured test specimen, the step of obtaining the test specimen may comprise obtaining the test specimen from a suitable test specimen storage (e.g., by using an automated system comprising for example one or more robots).

In case of a model of the test specimen, the method for testing of a plastic product may be computer implemented and may comprise performing a virtual measurement of at least one rheological property of a model of the test specimen. The model may be obtained by suitable numerical simulation known in the art. The step of obtaining a model of the test specimen may thus comprise obtaining a model of the test specimen by a numerical simulation performed by a computing device. The model may be precomputed and stored in a model storage device (e.g., in a database), in which case the obtaining a test specimen or a model of the test specimen may comprise reading data regarding the precomputed model of a particular test specimen from the model storage device. Subsequently, a virtual rheological measurement may be performed by a computing device on the obtained model of the test specimen. A virtual rheological measurement relates to a (numerical) simulation of the at least one rheological property of the test specimen based on a model of the test specimen.

The numerical simulation to obtain a model of the test specimen and/or the virtual rheological measurement may be executed on any suitably programmed computing devices, comprising for example at least one processor or computer. The numerical simulation to obtain a model of the test specimen and/or the virtual rheological measurement may be carried out on the same computing device or on different computing devices.

For example, each of the test property determination unit, the test specimen obtaining unit configured to obtain a model of the test specimen and the virtual measurement unit may be implemented as a respective software module executed on at least one processor of at least one computer. It is also possible to implement each of the test property determination unit, the test specimen obtaining unit configured to obtain a model of the test specimen and the virtual measurement unit as a dedicated hardware module comprising at least one processor programmed to execute the respective steps.

Regarding both the real and virtual rheological measurement, the at least one property of the tested plastic product may, for example, be a rheological property predicted based on the results from the real or virtual measurement using the test specimen, i.e., based on the set of real or virtual measurement data. A combination of real and virtual measurement is also possible. In this case the at least one property of the tested product may be determined based on the combined set of real and virtual measurement data. The at least one determined property may include, but is not limited to pressure resistance, intended breaking points, temperature resistance (e.g., for steam sterilization); irradiation resistance (e.g., gamma irradiation), etc.

A fourth aspect of the invention relates to a system for testing of a plastic product. The system may be configured to carry out the method for testing of a plastic product according to the third aspect and examples thereof described above. Accordingly, the explanations regarding the respective method steps and/or their implementation, effects and advantages apply also to the system for testing a plastic product and its units and vice versa.

In particular, the system for testing of a plastic product may comprise:
a test specimen obtaining unit configured to obtain a test specimen or a model of the test specimen according to any one of the above described aspect and examples, wherein the test specimen is of the same plastic material as the tested plastic product and is optionally manufactured according to a manufacturing process with the same process parameters as the tested plastic product;
a measurement unit configured to perform a measurement of at least one rheological property of the test specimen, thereby obtaining a set of measurement data and/or to perform a virtual measurement of at least one rheological property of the model of the test specimen, thereby obtaining a set of virtual measurement data; and
a test property determination unit configured to determine at least one property of the tested plastic product based on the obtained set of measurement data and/or the obtained set of virtual measurement data.

As described in connection with the method for testing a plastic product, a measuring unit for performing a (real-world) measurement of at least one rheological property of the test specimen may comprise one or more rheometers. The test specimen obtaining unit may comprise one or more manufacturing units (including respecting equipment) for manufacturing a test specimen made of plastic material, such as for example according to the manufacturing method (e.g., injection moulding) described in connection with the above aspects and examples.

The test property determination unit, the test specimen obtaining unit configured to obtain a model of the test specimen and a measurement unit configured to perform a virtual rheological measurement on a model of the test specimen ("virtual measurement unit") may be implemented in a computing device(s) programmed to execute the respective steps. For example, each of the test property determination unit, the test specimen obtaining unit configured to obtain a model of the test specimen and the virtual measurement unit may be implemented as a respective software module executed on at least one processor of at least one computer. It is also possible to implement each of the test property determination unit, the test specimen obtaining unit configured to obtain a model of the test specimen and the virtual measurement unit as a dedicated hardware module comprising at least one processor programmed to execute the respective steps. The test property determination unit, the test specimen obtaining unit configured to obtain a model of the test specimen and the virtual measurement unit may be configured to run, i.e., be executed on the same computer or hardware or on different computers or hardware of a computer system.

The at least one property of the tested plastic product obtained by the above described method and system for testing a plastic product (including virtual testing) may be used for example to test and/or predict the properties of plastic products of various designs and/or produced by various manufacturing methods prior to their actual manufacturing, in particular for predicting any defects that may occur. Based on the predicted properties, it may be determined (for example automatically) that the tested design and/or manufacturing method is ready for deployment and/or a decision may be made to change (e.g., by respective controller(s)) the design and/or at least one process parameter of the manufacturing method (such as temperature, flow rate, etc.). If the design and/or manufacturing method are determined to be ready for a deployment, a controller be instructed to configure and/or start at least one manufacturing process for manufacturing the plastic product(s).

In case of real testing, the test results (measurement results), optionally together with the corresponding manufacturing process parameters, may be stored in a suitable data storage (e.g., in a database). By repeating the testing using test specimens of various plastic materials and/or designs and/or manufactured by manufacturing processes characterized by various process parameters, a rheological data set may be obtained or existing rheological data set may be updated. The rheological data set may be subsequently used to virtually test plastic products produced by manufacturing methods having various process parameters using respective models. The virtual testing of the plastic products may be carried out by using known simulation methods, for example known Digital Twin simulation methods. The rheological data set may be continuously updated and/or adjusted as new test data is obtained.

In addition to testing a plastic product, the above described test specimen may be used for various technical purposes, including, but not limited to one or more of the following:
validating a rheological data set comprising at least one rheological characteristic of a plastic material and corresponding manufacturing process parameters;
testing or validating a model of a process for manufacturing of plastic products;
determining at least one property of a plastic product to be manufactured and/or of a manufacturing process for a plastic product to be manufactured.

For example, data which are gathered by measuring the rheological characteristics of several variants of test specimens (e.g., as in the above described kit of test specimens) and optionally of numerous plastic materials can be used as supporting means, in order to:
predict or determine manufacturing process parameters for a desired plastic product and properties thereof and pre-determined plastic material. The process parameters may be, for example, optimal or desired process parameters or process parameters/areas within a process parameter range that need to be avoided; and/or
predict or determine the plastic material (such as optimal plastic material) to be used for the manufacturing of a desired plastic product and properties thereof under pre-defined process parameter; and/or
predict or determine the plastic material (such as optimal plastic material) and the manufacturing process parameters to be applied for a desired plastic product and properties thereof.

The properties may include, but are not limited to pressure resistance, intended breaking points, temperature resistance (e.g., for steam sterilization); irradiation resistance (e.g., gamma irradiation), etc.

Thus, a fifth aspect of the invention relates to a method for validating a rheological data set comprising at least one rheological characteristic of a plastic material and corresponding manufacturing process parameters, comprising:
manufacturing a test specimen according to the above described first aspects and examples, wherein the test specimen is manufactured from a plastic material having rheological characteristics as provided by the rheological data set and is manufactured by a manufacturing process having manufacturing process parameters as provided by the rheological data set;
performing a measurement of at least one rheological characteristic of the test specimen, thereby obtaining a first data set comprising at least one measurement value of the at least one measured rheological characteristic of the test specimen;
performing a virtual rheological measurement of the at least one rheological characteristic of a model of the test specimen generated using the rheological data set, thereby obtaining a second data set comprising at least one virtual measurement value of the at least one rheological characteristic of the test specimen, wherein the model of the test specimen is generated by a simulation using the same plastic material characteristics and the same manufacturing process parameters as used for the manufacturing of the test specimen;
determining a deviation between the measurement values contained in the first data set and the second data set; and
determining whether the rheological data set is valid or invalid based on the determined deviation.

The manufacturing of the test specimen, the measurement of a test specimen, the virtual measurement on a model of the test specimen, the obtaining of a model of the test specimen, etc. may be the respective steps described in connection with the preceding aspects and examples thereof, to which an explicit reference is made.

The determination whether the rheological data set is valid or invalid may include determining whether the determined deviation is within predetermined boundaries (e.g., lower than a threshold) and if the determined deviation is within the predetermined boundaries determining that the rheological data set is valid, if the determined deviation is outside the predetermined boundaries, determining that the rheological data set is not valid. If it is determined that the rheological data set is a valid data set, the rheological data set may be used to generate models of plastic products to be manufactured and test their properties using simulation models (Digital Twin).

The method may further comprise comprising adjusting one or more of the (i) rheological data set, (ii) the model of the test specimen and (iii) the simulation of the model based on the first data set and/or the determined deviation.

The determination of a deviation between the measurement values contained in the first data set and the second data set and the determination whether the rheological data set is valid or invalid based on the determined deviation as well as the above described step of adjusting may be performed automatically, for example by a suitably programmed computing devices, such as the computing devices described in connection with the above first to fourth aspects.

A sixth aspect of the invention relates to a system for validating a rheological data set comprising at least one rheological characteristic of a plastic material and corresponding manufacturing process parameters. The system may be configured to carry out the method for validating a rheological data set comprising at least one rheological characteristic of a plastic material and corresponding manufacturing process parameters according to the above described fifth aspect and examples thereof.

The system may comprise:
a test specimen manufacturing unit configured to manufacture a test specimen according to the above described first aspect and examples thereof, wherein the test specimen is manufactured from a plastic material having rheological characteristics as provided by the rheological data set and is manufactured by a manufacturing process having manufacturing process parameters as provided by the rheological data set;
a measurement unit configured to perform a measurement of at least one rheological characteristic of the test specimen, thereby obtaining a first data set comprising at least one measurement value of the at least one measured rheological characteristic of the test specimen;
a virtual measurement unit configured to perform a virtual rheological measurement of the at least one rheological characteristic of a model of the test specimen generated using the rheological data set, thereby obtaining a second data set comprising at least one virtual measurement value of the at least one rheological characteristic of the test specimen, wherein the model of the test specimen is generated by a simulation using the same plastic material characteristics and the same manufacturing process parameters as used for the manufacturing of the test specimen; and
a validation unit configured to determine a deviation between the measurement values contained in the first data set and the second data set and to determine, whether the rheological data set is valid or invalid based on the determined deviation.

The test specimen manufacturing unit for manufacturing of the test specimen, the measurement unit and the virtual measurement unit may be exemplary units as described in connection with the preceding aspects and examples thereof to which an explicit reference is made.

Further, the validation unit may be implemented in a suitably programmed computing device programmed to execute the respective steps. For example, the validation unit may be implemented as a respective software module executed on at least one processor of at least one computer. It is also possible to implement the validation unit as a dedicated hardware module comprising at least one processor programmed to execute the respective steps. The virtual measurement unit and the validation unit may be configured to run, i.e., be executed on the same computer or hardware or on different computers or hardware of a computer system.

As described above, the above described test specimen may be used to validate a model of a process for manufacturing of plastic products.

According to a seventh aspect, there is provided a method for validating a model of a process for manufacturing of plastic products, comprising:
manufacturing a test specimen according to the above described first aspect and examples thereof, wherein the test specimen is manufactured from a plastic material by a manufacturing process having a set of manufacturing process parameters as provided by the model;
performing a measurement of at least one rheological characteristic of the test specimen, thereby obtaining a first data set comprising at least one measurement value of the at least one measured rheological characteristic of the test specimen;
performing a virtual rheological measurement of the at least one rheological characteristic of a model of the test specimen generated using the rheological data set, thereby obtaining a second data set comprising at least one virtual measurement value of the at least one rheological characteristic of the test specimen, wherein the model of the test specimen is generated using the same plastic material characteristics and the same manufacturing process parameters that are used for the manufacturing of the test specimen;
determining a deviation between the measurement values contained in the first data set and the second data set; and
determining whether the model is valid or invalid based on the determined deviation.

If a model is determined to be valid, it may be used to model plastic products having various designs and test their properties using simulation methods (such as Digital Twin methods). Thus, the design of a given plastic product to be manufactured may be virtually tested before actual manufacturing launching a manufacturing process and, if needed, may be appropriately altered. If the tested design is determined to meet the required specifications and/or quality standards, the plastic products may be produced based on this design.

An eight aspect relates to a system for validation of a model of a manufacturing process for plastic products, said system configured to carry out the method for validating a model of a process for manufacturing of plastic products according to the above described aspect and examples thereof. The system may comprise:
a test specimen manufacturing unit configured to manufacture a test specimen according to the above described first aspect and examples thereof, wherein the test specimen is manufactured from a plastic material by a manufacturing process having a set of manufacturing process parameters;
a measurement unit configured to perform a measurement of at least one rheological characteristic of the test specimen, thereby obtaining a first data set comprising at least one measurement value of the at least one measured rheological characteristic of the test specimen;
a virtual measurement unit, configured to perform a virtual rheological measurement of the at least one rheological characteristic of a model of the test specimen generated using the rheological data set, thereby obtaining a second data set comprising at least one virtual measurement value of the at least one rheological characteristic of the test specimen, wherein the model of the test specimen is generated using the same plastic material characteristics and the same manufacturing process parameters that are used for the manufacturing of the test specimen; and
a validation unit configured to determine a deviation between the measurement values contained in the first data set and the second data set and to determining whether the model is valid or invalid based on the determined deviation.

The manufacturing of the test specimen, the measurement of a test specimen, the virtual measurement on a model of the test specimen, the obtaining of a model of the test specimen, etc. may be the respective steps described in connection with the preceding aspects and examples, to which an explicit reference is made. Similarly, the respective units performing these steps may be the exemplary units described in connection with the preceding aspects and examples, to which an explicit reference is made.

The determination of a deviation between the measurement values contained in the first data set and the second data set and the determination whether the rheological data set is valid or invalid based on the determined deviation as well as the above described step of adjusting may be performed automatically, for example by a suitably programmed computing devices, such as the computing devices described in connection with the above first to fourth aspects.

As described above, the above described test specimen may be used for determining at least one property of a plastic product to be manufactured and/or of a manufacturing process for a plastic product to be manufactured.

An exemplary computer implemented method for determining at least one property of a plastic product to be manufactured and/or of a manufacturing process for a plastic product to be manufactured according to a ninth aspect of the invention may comprise:
obtaining reference data of a plurality of reference plastic products, wherein the reference data comprises at least one property of each of the reference plastic products, and wherein said reference data is obtained by testing each of said plurality of reference plastic products according to the method of the above described third aspect and examples thereof, and
determining at least one property of the evaluated plastic product and/or at least one parameter of the evaluated manufacturing process based on the reference data.

The reference data acquisition unit may for example obtain reference data by reading respective data from a data storage storing reference data.

The at least one property of the evaluated plastic product and/or at least one parameter of the evaluated manufacturing process may be optionally predicted based on additional reference data of a plurality of reference plastic products that are tested by other methods. For example, instead of using a test specimen, already manufactured plastic products may be directly tested to determine least one rheological property thereof. The so obtained additional reference data may be used to determine/predict the properties of the evaluated plastic product and/or manufacturing process.

The determined/predicted properties and/or parameters of the evaluated plastic product and/or manufacturing process may be used to determine a plastic material for the plastic product to be manufactured and/or one or more (e.g., optimal) parameters of the manufacturing process for the plastic product to be manufactured, as described above. The plastic product may then be manufactured from the determined (e.g., optimal) plastic material and/or by a manufacturing process with the determined at least one (e.g., optimal) parameter.

A tenth aspect of the invention relates to a computer system for determining at least one property of a plastic product to be manufactured and/or of a manufacturing process for a plastic product to be manufactured:
reference data acquisition unit configured to obtain reference data of a plurality of reference plastic products, wherein the reference data comprises at least one property of each of the reference plastic products, wherein said reference data is obtained by testing each of said plurality of reference plastic products according to the method of the above described third aspect and examples thereof, and
property determination unit configured to determine at least one property of the evaluated plastic product and/or at least one parameter of the evaluated manufacturing process based on the reference data.

The individual units for obtaining of data, such as the reference data acquisition unit, or for determining of data, such as the property determination unit may be implemented as in a suitably programmed computing system, such as the computing system described above in connection with the preceding aspects and examples.

An eleventh aspect of the invention relates to a method for manufacturing a plastic product, comprising:
determining at least one property of the evaluated plastic product and/or at least one parameter of the evaluated manufacturing process according to the method of the above described ninth aspect, said at least one property of the evaluated product including a plastic material for the plastic product to be manufactured; and
manufacturing the plastic product from the determined plastic material and/or by a manufacturing process with the determined at least one parameter.

A tenth aspect of the invention relates to a system for manufacturing a plastic product, configured to carry out the method for manufacturing a plastic product.

The system may comprise:
a computer system for determining at least one property of a plastic product to be manufactured and/or of a manufacturing process for a plastic product to be manufactured according to the method of the above described tenth aspect, said at least one property of the evaluated product including a plastic material for the plastic product to be manufactured; and
a manufacturing unit configured to manufacture the plastic product from the determined plastic material and/or by a manufacturing process with the determined at least one (optimal) parameter.

The manufacturing of the plastic product from the determined plastic material and/or by a manufacturing process with the determined at least one parameter and the respective manufacturing unit may be the manufacturing method and units as described in connection with the preceding aspects and examples.

These and other objects, features and advantages of the present invention will become more apparent upon reading of the following detailed description of preferred embodiments and accompanying drawings. Other features and advantages of the subject-matter described herein will be apparent from the description and the drawings and from the claims. It should be understood that even though embodiments are separately described, single features thereof may be combined to additional embodiments.
**Fig. 1** shows a schematic view of an exemplary test specimen, wherein Fig. 1A shows a perspective view of the top side of the test specimen and Fig. 1B shows a perspective view of the bottom side of the test specimen.
**Fig. 2** shows exemplary shrinkage measurement points of the test specimen shown in Fig. 1;
**Fig. 3** shows an exemplary sink depth measurement using the test specimen of Fig. 1;
**Fig. 4** shows an exemplary weldline length measurement using the test specimen of Fig. 1;
**Fig. 5** shows an exemplary shrinkage measurement using the test specimen of Fig. 1 having a plurality of extension tabs;
**Fig. 6A** and **6B** show a second exemplary test specimen;
**Fig. 7A** and **7B** show a third exemplary test specimen;
**Fig. 8A** and **8B** show a fourth exemplary test specimen;
**Fig. 9** shows a flowchart of an exemplary method employing an exemplary test specimen, for example the test specimen as described in connection with Figs. 1 to 8.

In the figures reference signs denoting similar elements, components, etc. are used, wherein same reference signs may be used to denote same or similar elements, components, etc.

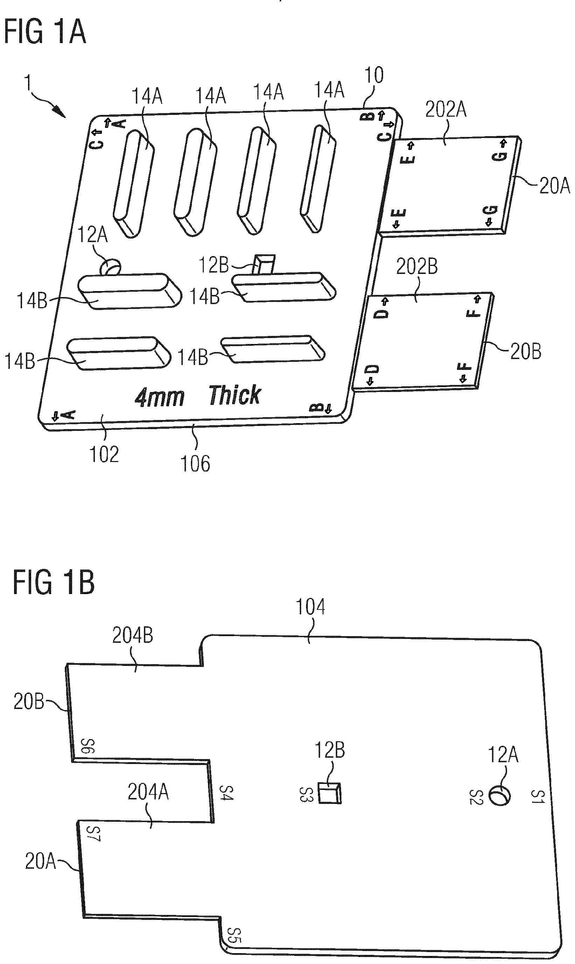

**Fig. 1** is a perspective view of an exemplary test specimen 1 for rheological testing of plastic products, wherein **Fig. 1A** shows a top view of the test specimen and **Fig. 1B** shows a bottom view of the test specimen. The test specimen 1 comprises a rectangular shaped plate body 10. The plate body 10 has a first major surface/face (top surface/face) 102, a second major surface/face (bottom surface/face) 104 opposite to the first major surface 102 and a side surface (peripheral surface) 106 connecting the first major surface 102 and the second major surface 102. The first major surface 102 and the second major surface 104 are substantially plane surfaces arranged parallel to each other. The first major surface 102 may have various spatial features arranged on or in it. Accordingly, the first major surface 102 may be referred to a structured surface. The second major surface 104 may be a substantially smooth, flat surface. Other configurations are also possible (such as two structured major surfaces).

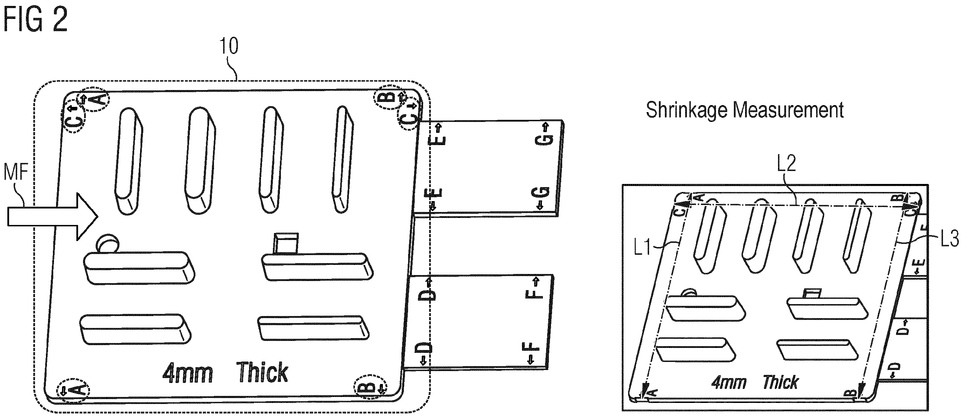

The thickness of the plate body 102 (e.g., measured at portions of the plate body that free from spatial features, sensor zones, etc.) is 4 mm. Other thickness values are also possible, such as for example 1 mm, 7 mm, etc. The thickness, length and the width of the plate body 10 may be set to predetermined values, such as for example to 100 mm side length, 100 mm side width and a standard thickness of 1 mm, 4 mm, 7 mm, etc. Other dimensions are also possible. For example, the side length and/or width of the plate body 10 may each be in the range of tens of millimeter to several hundreds or thousands of millimeters, for example in the range of about 30 mm to about 200 mm or more, depending on the product that is to be tested. The thickness of the plate body 10 may be from about 0.5 mm to any thickness suitable for the tested plastic products. For example, if the tested plastic products have a maximal thickness of 10.5 mm a test specimen with a thickness of 7 mm and a 150% thickness rib may be suitable. By measuring the deviation of the measured thickness, width, length and/or other spatial dimension of the plate body 10 from predetermined nominal thickness, width and/or length, respectively, it is possible to determine the shrinkage of test specimen produced from a given plastic material and/or under given manufacturing conditions as described for example in connection with **Fig. 2****.** The nominal thickness, width, length and/or other spatial dimension may the those of the mould for forming the test specimen. A comparison of mould dimension(s) vs measured plastic test specimen size(s) provides respective %age shrinkage.

The plate body 10 is made of a solid plastic material corresponding to the plastic material of a plastic product that is to be tested, wherein one or more spatial features are provided in or on the plate body 10 and in particular in or on the first major surface 102 of the plate body 10. As described above, each spatial feature is indicative of a defect occurring in the plastic products or a geometric feature of the plastic products.

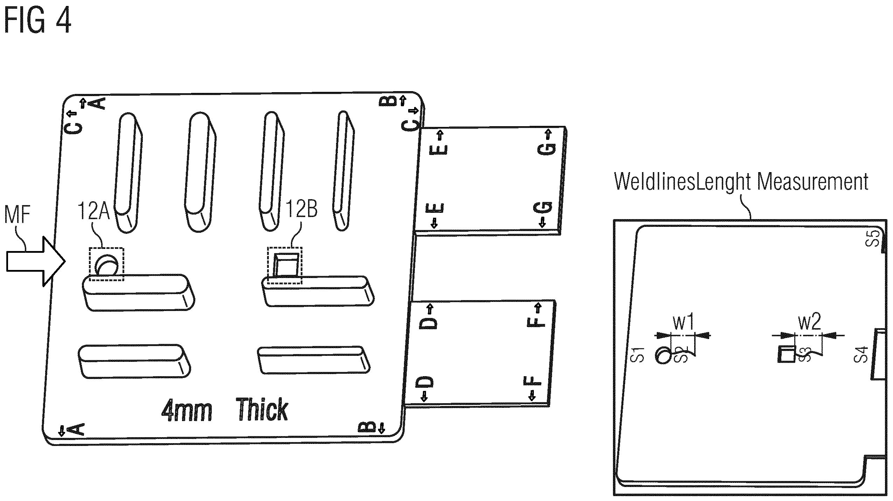

As shown in Figs. 1A and 1B, two through openings 12A and 12B are formed in the plate body 10. The first through openings 12A is a cylindrical through opening, in this example a cylindrical through opening with a circular cross-section. The second through opening 12B is a cuboid through opening, in this example with a square cross section. With the help of the through openings 12A and 12B, it is possible to measure the weldline length, as described for example in connection with **Fig. 4****.** The first and second through openings 12A and 12B may accordingly be referred to as "weldline generators". The shape of the through openings 12A and 12B is not restricted to cylindrical or cuboidal shape. For example, the through opening 12A and/or 12B may exhibit a triangular, trapezoidal, pentagonal, hexagonal or any other suitable cross-sectional shape.

The size of the through openings 12A and 12B may be suitably selected, for example in view of obtaining rheological measurements of weldline defects and/or of typical spatial features in tested plastic product(s), as described above The diameter of the cylindrical through opening 12A may, for example, be 6 mm. However, other sizes are also possible. For example, the diameter of the through opening 12A may be from a millimeter up to several millimeters, tens of millimeters or hundreds of millimeters, depending on the size of the test specimen and/or the plastic product to be tested. Typical diameters as 3 mm to 10 mm, so as to produce a visible measurable weldline.

The side length of the cuboid through opening 12B ("weldline square generator") may, for example, be 6 mm. Other sizes are also possible, as described above. For example, the side length of the through opening 12 may be from a millimeter up to several millimeters, tens of millimeters or hundreds of millimeters, depending on the size of the test specimen and/or the plastic product to be tested. Typical diameters as 3 mm to 10 mm, so as to produce a visible measurable weldline.

The through openings 12A and 12B are arranged such that the line connecting i) the center of the circular cross-section of the first through opening 12A with the first major surface 102 of the plate body and ii) the center of the square cross-section of the second through opening 12B with the first major surface 102 of the plate body 10 is parallel to one side of the first major surface 102 of the plate body 10. The connecting line may for example be parallel to a material feed direction MF (the material feed direction is shown for example in Figs. 2 to 5).

The test specimen 1 comprises further a plurality of ribs 14A, 14B extending from and connected to the first major surface 102 of the plate body. The ribs 14A, 14B are of the same plastic material as the plate body 10. In the example shown in Fig. 1, there is a group of eight ribs 14A, 14B arranged in two sub-groups, each comprising four ribs. In one of the sub-groups, the ribs 14A are arranged substantially parallel to each other and parallel to a first side of the substantially rectangular plate body 10. The ribs 14B in the second sub-group are arranged in pairs of ribs parallel to each other. Further, the ribs 14B in the second-sub-group are orthogonal to the ribs 14A in the first sub-group and orthogonal to a second side of the substantially rectangular plate body 10, the second side being orthogonal to the first side. Further, the ribs 14A in the first sub-group may be arranged orthogonal to the direction of material feed MF (transverse direction). The ribs 14A may be referred, respectively, as "transverse ribs". The ribs 14B in the second sub-group are arranged in the direction of the material feed MF (longitudinal direction) and may be referred, respectively, as "longitudinal ribs".

The ribs 14A in the first sub-group all have different thicknesses. Similarly, the ribs 14B in the second sub-group have all different thicknesses. The thicknesses of the ribs in the first sub-group are set for example to a 50%, 75%, 100% and 125% of the thickness of the plate body 10. The size of the ribs 14A and 14B may be suitably selected, for example in view of obtaining rheological measurements of defects and/or of spatial features typically found in tested plastic product(s) as described above,

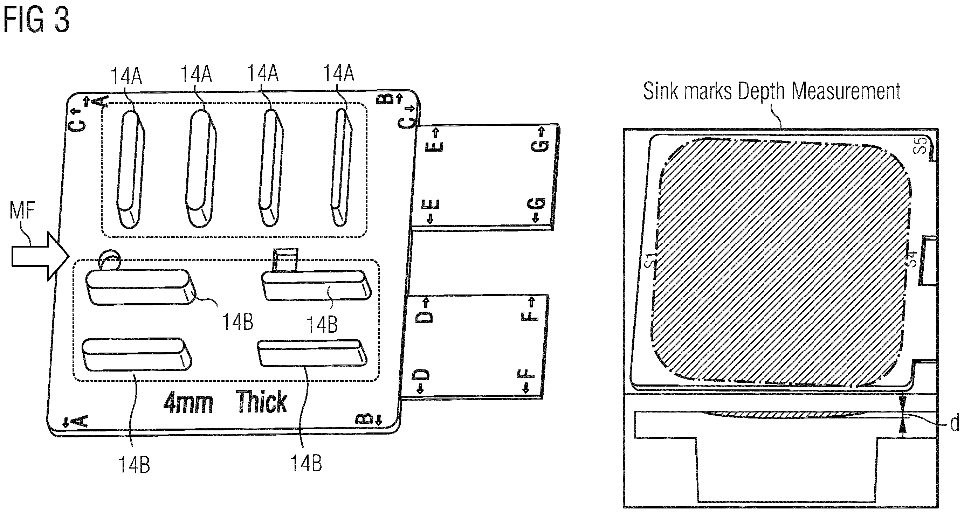

With the help of the ribs 14A, 14B, it is possible to measure the sink rate (sink marks), as described for example in connection with **Fig. 3****.**

The test specimen 1 comprises further two extension tabs 20A and 20B formed from a solid body of plastic material, which may be the same or different from the plastic material forming the plate body 10. Each extension tab 20A, 20B may have a substantially square or rectangular form having four sides. Each extension tab 20A, 20B is connected to the (same) side surface 106 of the plate body 10 on one of its four sides and extends from the side surface 106 of the plate body 10, for example in a direction substantially orthogonal to the side surface 106. The side of the plate body 10 to which the extension tabs 20A and 20B are connected may be opposite to the side the material feed.

The extension tabs 20A and 20B may be arranged such that one of the side surfaces of the first extension tab 20A and one of the side surfaces of the second extension tab 20B face each other and are substantially parallel to each other, so that the distance between the respective side surfaces of the two extension tabs 20A and 20B facing each other is substantially constant.

Each of the extension tabs 20A and 20B has a plate form with a substantially constant thickness. Similar to the plate body 10, each extension tab 20A, 20B has two substantially parallel major surfaces and a side (peripheral) surface connecting the two major surfaces. The two major surfaces of the extension tab may be substantially flat, smooth surfaces. In the figures, the reference sign 202A denotes a first major surface of the extension tab 20A, the reference sign 204A denotes a second major surface of the extension tab 20A, the reference sign 202B denotes a first major surface of the extension tab 20B and the reference sign 204B denotes a second major surface of the extension tab 20B.

The thickness of each extension tab 20A, 20B may be set appropriately, for example to a fraction (e.g., 75%, 50%) of the thickness of the plate body 10. In the example shown in Figures 1 to 5, the thickness of the first extension tab 20A is 75% of the thickness of the plate body 10 and the thickness of the second extension tab 20B is 50% of the thickness of the plate body 10.

The thicknesses of the two extension tabs 20A and 20B may be set at different fractions of the thickness of the plate body (or the portion of the plate body from to which the extension tabs are connected). In an example, the thicknesses of the two extension tabs may be set for example at 50% and 75% of the plate body thickness, respectively. The extension tabs 20A and 20B may have the same side lengths and/ or the same widths. For example, each of the extension tabs 20A and 20B may have 40 mm x 30 mm side dimensions (length x width).

The dimensions of the extension tabs 20A and 20B are not limited to these dimensions. For example, the thicknesses of the extension tabs 20A and 20B may be set to other fractions of the thickness of the plate body 10. Further, the side lengths may also differ. Further, the side dimensions of each extension tabs 20A and 20B may be set to different values, for example such as to enable easy measurement of the tab distortion and/or width of the tab for shrinkage. Exemplary, the side dimensions (length and width) may be in the range of about 5 mm to about 100 mm, more specifically in the range of about 10 mm to about 60 mm, for example in the range of about 10 mm to about 30 mm.

The number of extension tabs is not limited to two. For example, the test specimen 1 may comprise one extension tab or more than two extension tabs. Further, the size and form of the extension tabs may vary.

Further, in the example shown in Figs. 1A and 1B, the test specimen 1 and in particular the plate body 10 and the extension tabs 20A, 20B of the test specimen have together seven sensor indicators (also referred for as sensor zones) S1 to S7 associated with respective sensors embedded in a mould for forming the test specimen, such as one or more of the above described sensors for measuring temperature and/or pressure, for example as a function of the elapsed time. The sensor zones S1 to S7 are arranged on the second major surface 104 of the plate body 10 and the second major surfaces 204A and 204B of the extension tabs 20A and 20B. The respective sensors associated with the sensor zones S1 to S7 are arranged in a mould for forming the test specimen 1 at positions that correspond to the positions of the sensor zones S1 to S7. In other words, the positions of the sensor zones S1 to S7 on the test specimen correspond to the positions of the respective sensors in the mould for forming the test specimen.

The sensors may be, for example, pressure sensors, such as direct or indirect (contactless) pressure sensors, temperature sensors (of for example a direct, contact sensor type). A combination of pressure and temperature sensors is also possible, in particular direct, contact pressure and temperature sensors. Such sensors are known in the art and commercially available.

As described above, the sensors may be for measuring physical properties or parameters of the manufacturing process, in particular an injection moulding manufacturing process. For example, the sensors may be arranged and configured to carry out filling pattern monitoring by using measured temperature and/or pressure data against a harmonized timescale to confirm when a material meets a respective sensor, for example to verify simulation results. In addition or alternatively, the sensors may be also be arranged and configured to carry out filling pressure and/or temperature monitoring by using measured pressure and/or temperature data against a harmonized timescale. In this case, the monitoring can be carried out over a longer time period, in order to establish the duration of the pressure and/or temperature reduction in the cavity of the mould, due to for example molten material shrinking as it cools. In addition or alternatively weldline pressure and/or temperature (for example as a function of the time) may be measured using respective sensors arranged behind the weldline generators.

For example, a first sensor associated with the sensor zone S1 and a fourth sensor associated with the fourth sensor zone S4 may be sensors for measuring a filling pattern. The filling pattern sensor associated with the sensor zone S1 may be arranged at a flow entry side (with respect to a direction of material flow MF) of the mould for forming the test specimen and the filling pattern sensor associated with the fourth sensor zone S4 may be arranged at a flow end side of the mould for forming the test specimen 1. The filling pattern sensors associated with the sensor zones S1 and S4 may be temperature and/or a pressure sensor, that may optionally record a time stamp or other time information, associated with each measurement. The information may be used to determine a filling pattern.

The second sensor zone S2 is arranged in the vicinity of the cylindrical through opening 12A. A sensor ("a first weldline sensor") associated with the second sensor zone S2 ("Weldline pattern sensor zone") is configured for measuring the pressure and/or temperature as a function of time, which enables the determination of a weldline pattern associated with the through opening 12A.

A third sensor zone S3 may be arranged in the vicinity of the second through opening 12B. A sensor ("a second weldline sensor") associated with the third sensor zone S3 ("Weldline pattern time measurement zone") may be a sensor for measuring the pressure and/or temperature as a function of the time, which enables the determination of a weldline pattern associated with the respective through opening 12Bat weldline created.

A fifth sensor zone S5 is arranged in one corner of the plate body 10, on the side of the plate body 10 from which the extension ribs 20A and 20B extend.

A sixth sensor zone S6 and a seventh sensor zone S7 are arranged in a corner of each of the extension ribs 20A and 20B on the side of each extension rib 20A and 20B, which is opposite to the side connected to the plate body. In the example, the sensor zones S6 and S7 are arranged in the two corners facing each other. Other arrangement of the sensor zones S6 and S7 is possible.

The sensor zones S5 to S7 are each associated with sensors to measure the pressure as a function of time, thus enabling monitoring of the flow of material throughout the mould for forming of the test specimen during filling and/or cooling of the melted plastic material. Thus, the sensors associated with the sensor zone S5 to S7 enable the determination of pressure pattern during filling and/or material cooling. In addition or alternatively, temperature sensors may be arranged in the areas of the mould corresponding to the one or more of the sensor zones S5 to S7, to enable monitoring of the temperature of the melted material as it flows into the mould and/or cools down.

The sensor zones S1 to S4 may be arranged in this order along a line which coincides with the line connecting the centers of the cross-sections of the cylindrical through opening 12A and the cuboidal through opening 12B.

As described above, the test specimen may exhibit one or more measurement points orzone. **Fig. 2** shows exemplary shrinkage measurement points arranged on the plate body 10 test specimen 10. Each shrinkage measurement point is indicated by a respective dashed-line circle and one of the letter "A", "B" and "C". Further, on the right-hand side of Fig. 2, the lines L1 to L3 indicate the lines for measuring a distance between two shrinkage measurement points, which may be converted to respective shrinkage values.

With the help of the shrinkage measurement points A - C, it is possible to measure a distance, for example between two shrinkage measurement points or between two edge points of the plate body lying on a line passing through the shrinkage measurement points. The he measured distance may be converted to a shrinkage value in comparison to a nominal distance of the respective mould for moulding the test specimen. For example, the following shrinkage measurement values may be determined:
- a shrinkage longitudinal to material flow measured at a line C-C (Line L2)
- a shrinkage transversal to material flow measure at lines A-A and B-B (Lines L1 and L3).

In Fig. 2 (and Figures 3 to 5) the arrow MF on the left-hand side of Fig. 2 indicates the direction of material feed as (molten) plastic material is injected into a cavity of a mould for forming the test specimen through a gate of the mould. This results in a direction of a material flow of the plastic material away from the gate.

**Fig. 3** shows an exemplary sink depth measurement using the test specimen of Fig. 1. For this measurement, the flatness variation on the flat face (i.e., on the second major surface 104) behind the ribs is measured. More specifically, the maximum flatness depth "d" for each rib's location is measured, as illustrated in the right-hand side of Fig. 3. The maximum flatness deviation for each rib location is determined with respect to a nominal plane in which the flat second major surface 104 of the plate body 10 is located. Thus, it is possible to obtain data regarding flatness variations, due for example to a variation in thickness of a plastic product that is to be tested.

**Fig. 4** shows an exemplary weldline length measurement using the test specimen of Fig. 1. The weldline length measurement may include a measurement of the distances w1 and w2 between an edge point of the respective through opening 12A and 12B and the end of a visible portion of the weldline on the test specimen. The measured value may be then compared to a length calculated in a simulation of the manufacturing (e.g., moulding) process.

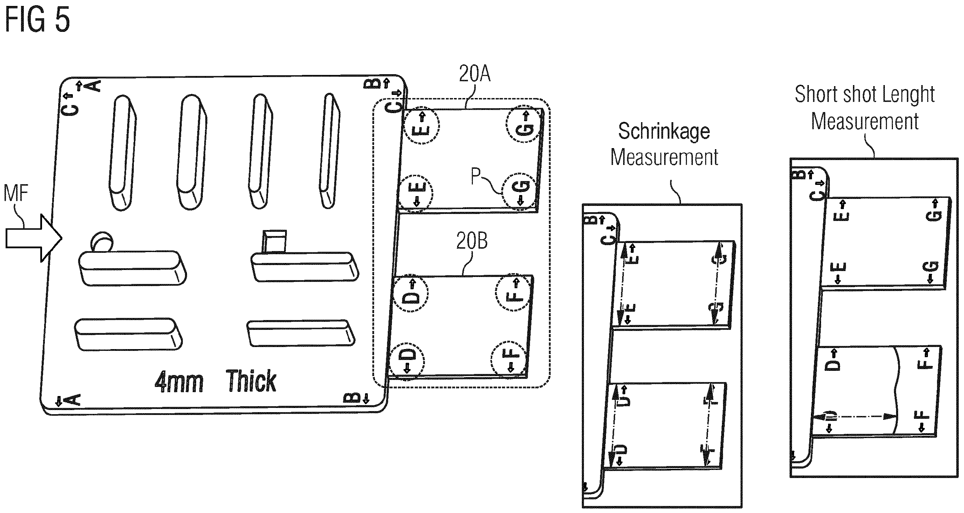

**Fig. 5** shows an exemplary shrinkage measurement using the test specimen of Fig. 1 having a plurality of extension tabs. Similar to the plate body 10, each of the extension tabs 20A and 20B is provided with a plurality of shrinkage measurement points. Each shrinkage measurement point of the respective extension tab is indicated by a respective dashed-line circle and one of the letters "D", "E", "F" and "G". As described in connection with Fig. 2, with a help of the shrinkage measurement points D-G, a distance (for example the distance between two measurement points E-E, D-D, F-F and G-G or between two edge points of the respective extension tab 20A, 20B lying on a line E-E, D-D, F-F and G-G passing through the shrinkage measurement points) may be measured and converted to a respective shrinkage value in comparison to a nominal distance of the respective mould for moulding the test specimen. In particular, a shrinkage transversal to material flow may be determined by measuring the above distances between or indicated by two shrinkage measurement points at E-E, D-D, F-F and G-G, respectively.

In addition, as shown on the right-hand side of Fig. 5, the length of the respective extension tab 20A, 20B may be measured from the end portion of the plate body 10, which contacts the respective extension tab 20A, 20B to the tab's end. The measurement may be carried out if, for example, short shot occurs. Short shot measurement typically involves a comparison of a virtual with an actual test specimen (or plastic product). The measurement and/or sensor data can be used in the same way as for a full test specimen (or plastic product), but sensors which are not reached will not be triggered.

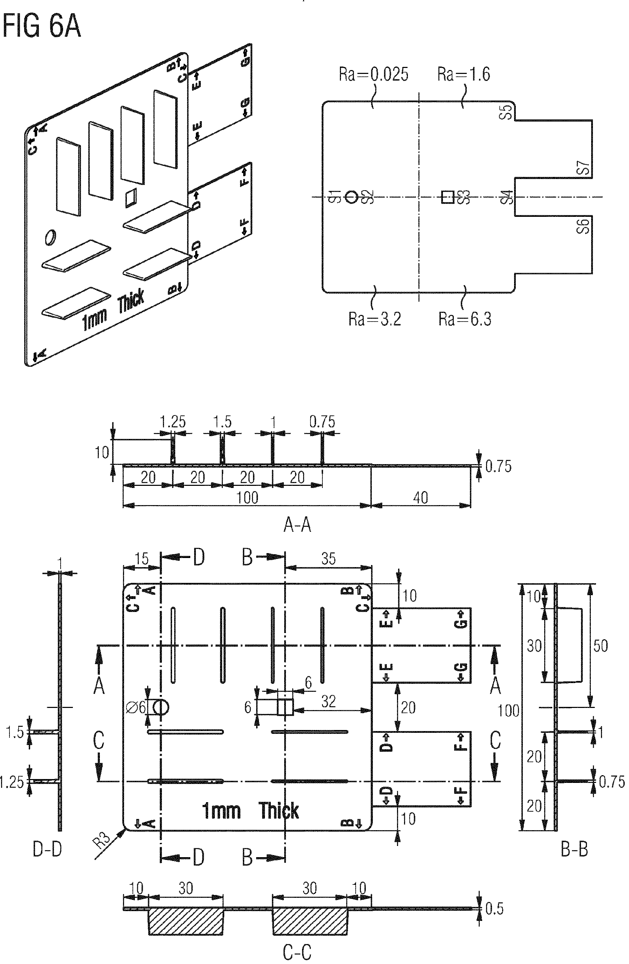

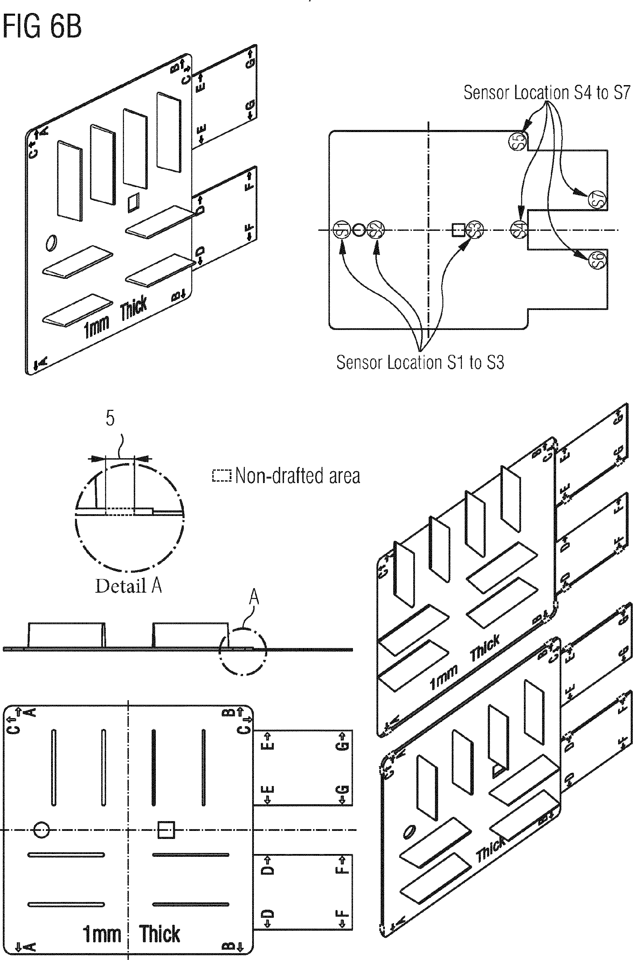

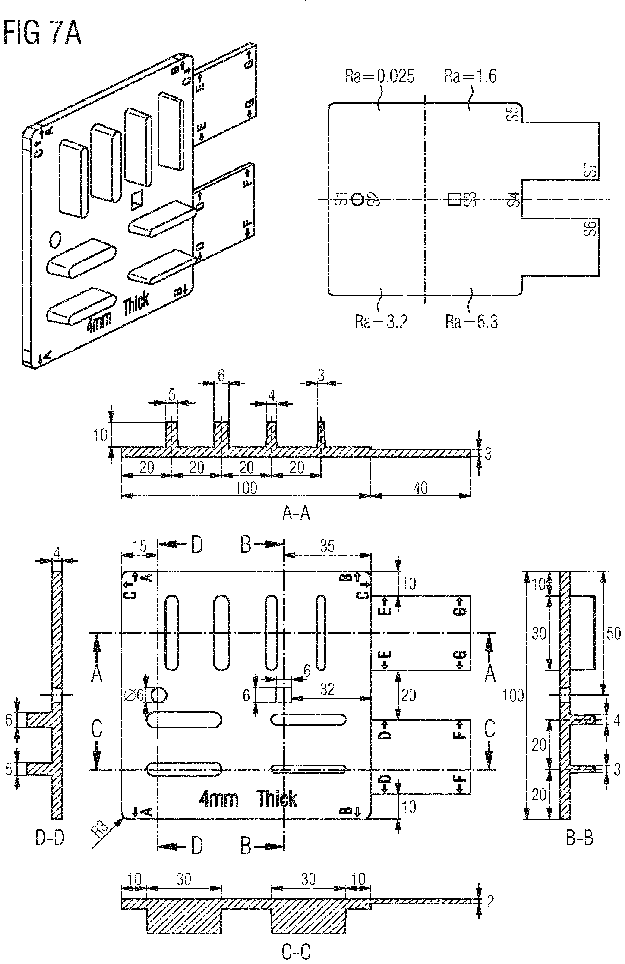

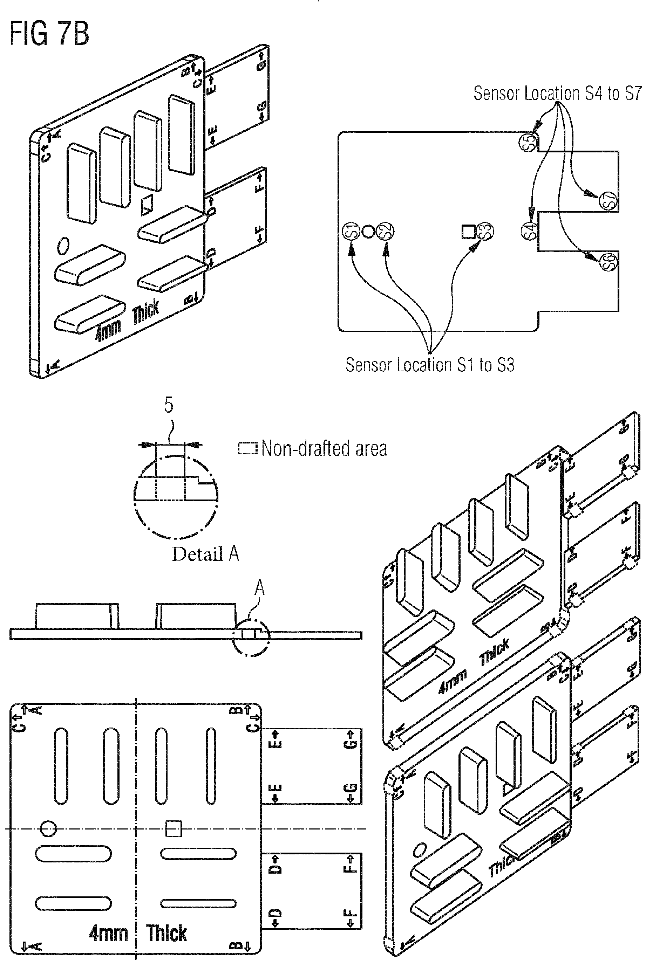

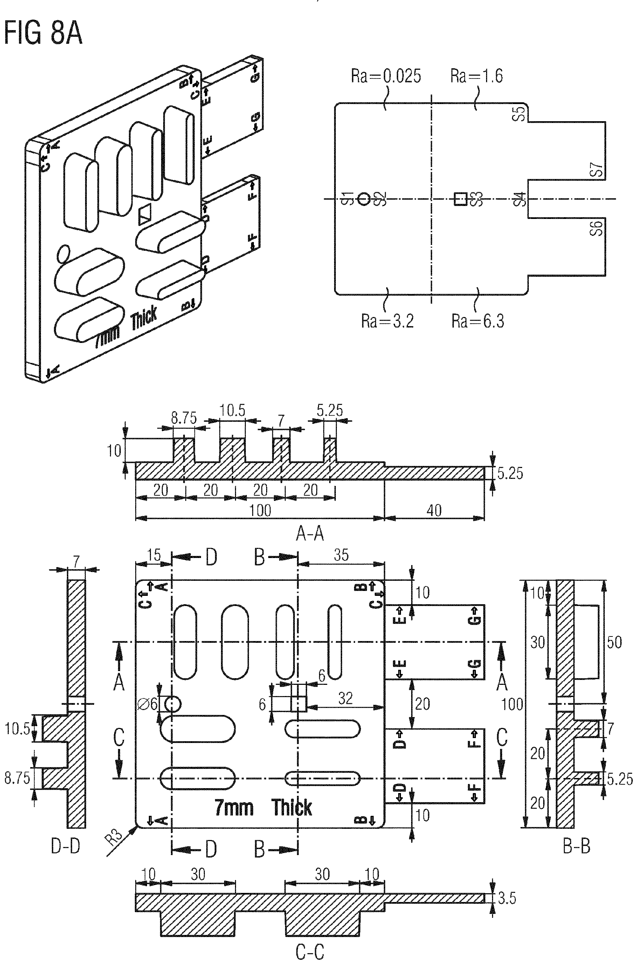

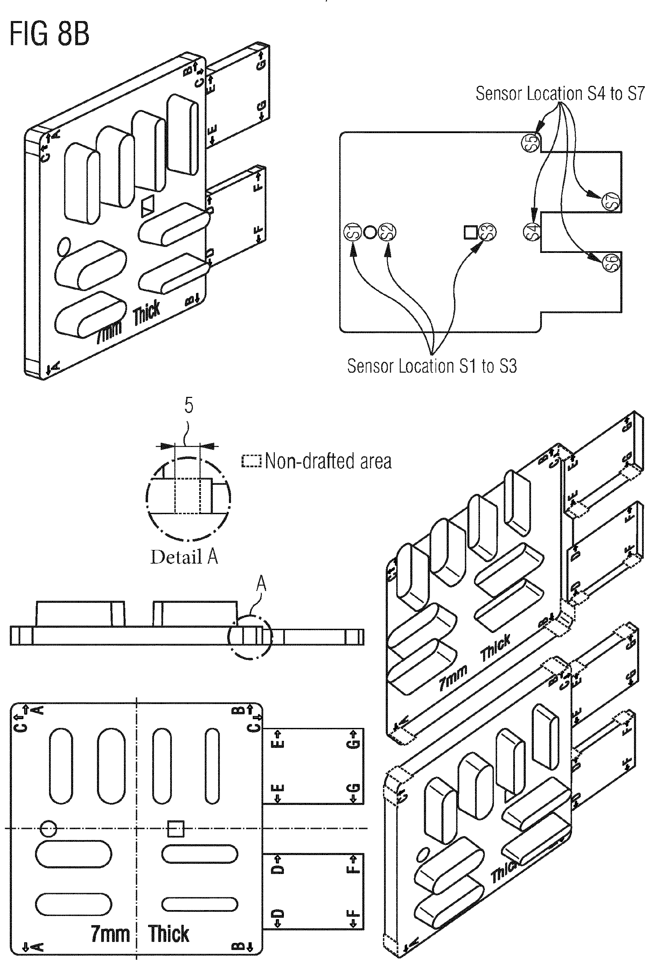

**Fig. 6A** and **6B** show technical drawings of a second exemplary test specimen. **Fig. 7A** and **7B** show technical drawings of a third exemplary test specimen. **Fig. 8A** and **8B** show technical drawings of a fourth exemplary test specimen. The second to fourth exemplary test specimens may have the same or similar structure as the test specimen described in connection with Figures 1 to 5 to which an explicit reference is made with respect to the description of the structure and function of the elements constituting the test specimen.

The exemplary test specimens shown in Figs. 6 to 8 may differ from the test specimen described in connection with Figs. 1 to 5 and/or may differ from each other in one or more dimensions, such as the thickness, length and/or with of the plate body, the thickness, length and/or hight of the ribs, the size of the through openings, the thickness, length and/or width of the extension tabs, etc.. The dimensions (in [mm]) of each of the elements constituting the respective exemplary test specimens are indicated in the technical drawings. These dimensions are exemplary and various test specimens having different dimensions may be manufactured.

The exemplary specimens shown in Figures 6 to 8 may further exhibit one or more "non-drafted" areas or locations, as shown in Detail A of each of Figs. 6B, 7B and 8B. The non-drafted areas or locations may form measurement zones and may be configured to provide parallel (i.e., non-tapered) sides, in order to enable conventional measurement instruments, such as vernier caliper, or similar handheld devices, to be used to obtain respective measurements.

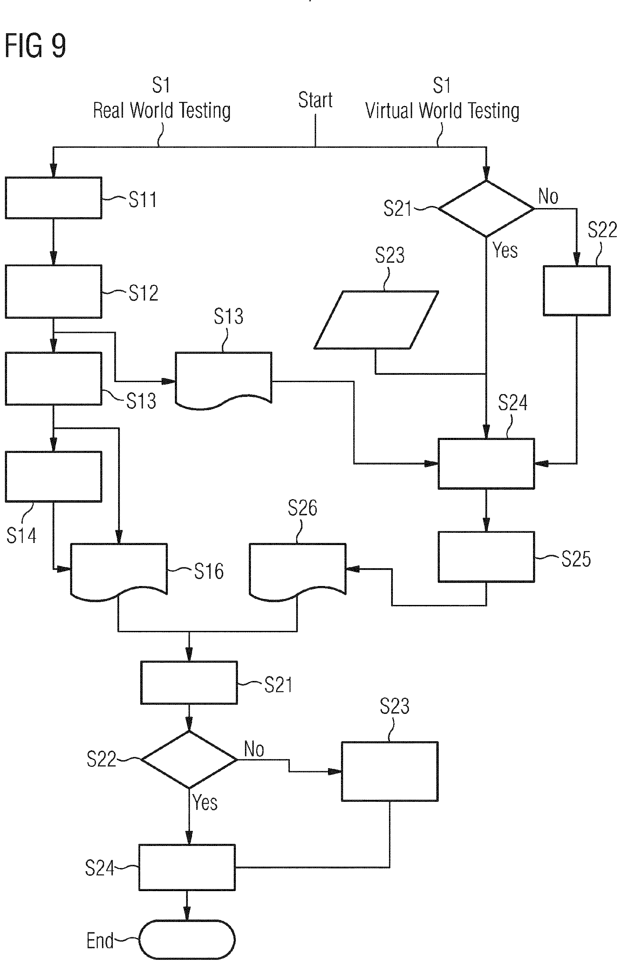

**Fig. 9** shows a flowchart of an exemplary method employing an exemplary test specimen, for example the test specimen as described in connection with Figures 1 to 8. As described above, a real-world data obtained by real-world measuring or testing a test specimen may be compared to virtual data obtained by virtual world measuring or testing performed on a model of the test specimen. The model of the test specimen may be obtained using a numerical simulation based on a rheological data set and data relating to manufacturing parameters of the manufacturing method of the test specimen. As described above, a comparison of the real-world data with the virtual data may be used to determine a validity of the rheological data set and/or the model of the test specimen. The data computation steps of the method may be performed by a suitably programmed computing system comprising at least one processor or computer.

After a start of the method, the method branches in real-world testing involving rheological measurements on a manufactured test specimen (e.g., an exemplary test specimen as described in connection with Figures 1 to 8 and virtual world testing involving virtual rheological measurements on a model of the manufactured test specimen. The real-world testing may comprise the following steps:
Step S11: Collect manufacturing data comprising the material of the test specimen to be subjected to the test, other specification parameter of the test specimen (e.g., plastic material, dimensions, etc.).
Step S12: Generate process parameters for injection mounding of the test specimen. The process parameters may include the following process parameters temperature, pressure, flow rate, residence time, geometry of the system, etc.
Step S13: Store the one or more process parameters generated in step S21, for example in a process parameters document, in a database, or in any other suitable form. The generated process parameters are also made available to a simulation of injection moulding process (step S24). The process parameters may be made available for example by transmitting and/or allowing access to the process parameters.
Step S14: Collect actual process data, including the values of one or more process parameters of the manufacturing process. The actual values may for example include the actual values of temperature, flow rate, pressure, etc. for example as a function of the time. The actual values may, for example, be obtained based on measurement using the sensors arranged at positions corresponding to the above described sensor zones S1 to S7.
Step S15: Perform real-world measurement for a plurality of measurement positions of at least one test specimen to obtain real-world measurement data S16. As explained above, the real-world measurement data may include measured data or at least one property of the test specimen obtained based on the measured data. The real-world measurement data S16 may further include the actual process data collected in step S13.

The virtual world testing may include the following steps:
Step S21: Check whether data (material data) of the plastic material of the test specimen exist. The material data may, for example, include rheological data.
If material data does not exist, obtain in step S22 material data regarding the plastic material of the test specimen. This may involve initiating a material characterisation process to obtain the required material data. It is also possible to subcontract a material characterisation process. After the material data is obtained, this data is made available (e.g., by transmitting, allowing access to, etc.) for use in step S24.
If data of the plastic material exist, the data is made available for use in step S24.
Step S23: Obtain a model of the mould and/or moulding process. As described above, various models of the mould and/or the moulding process are known in the art.
Step S24: Execute simulation of injection moulding process using the model from step S23, the material data of the test specimen and the process parameters from step S13 (i.e., the same process parameters that are used for injection moulding of the real-world test specimen).
Step S25: Measure the test specimen or a plurality of test specimens such as included in the above described kit for all measurement points by virtual (rheological) measurement to obtain virtual world measurement data S26. As described above, various known numerical simulation methods are known. The virtual world measurement data may include data regarding the same properties of the test specimen as included in the real-world measurement data.

The real-world measurement data S16 and the virtual world measurement data S26 may be used, for example to determine one or more of the following:
- whether the material data including rheological data used for virtual measurement is valid and optionally to update the material data with further data obtained by the real-world testing;
- whether the model of the mould and/or moulding process is valid and optionally refine the model.

Further, the real-world measurement data S16 and/or virtual world measurement data S26 may be used for example to:
predict or determine manufacturing process parameters for a desired plastic product and properties thereof and pre-determined plastic material. The process parameters may be, for example, optimal or desired process parameters or process parameters/areas within a process parameter range that need to be avoided; and/or
predict or determine the plastic material (such as optimal plastic material) to be used for the manufacturing of a desired plastic product and properties thereof under pre-defined process parameter; and/or
predict or determine the plastic material (such as optimal plastic material) and the manufacturing process parameters to be applied for a desired plastic product and properties thereof.

In an example, the method may comprise the following additional steps:
Step S21: Analyze the the real-world measurement data S16 and/or virtual world measurement data S26, said analysis including for example comparing the virtual world measurement data S26 with the real-world measurement data S16.
Step S22: Compare whether a deviation between a given property or parameter included in the virtual world measurement data S26 and the corresponding property or parameter included in the real-world measurement data S16 is within a predetermined range. This may be repeated for a plurality of properties and/or parameters. It is also possible to calculate a score based on a combination of the virtual world-real-world deviations determined for a plurality of properties and/or parameters.
If a deviation between the at least one virtual world property or parameter and the corresponding real-world property or parameter or if, for example, the score is not within a predetermined range(s), the method proceeds to step S23. If a deviation between the at least one virtual world property or parameter and the corresponding real-world property or parameter or if, for example, the score is within a predetermined range(s), the method proceeds to step S24.
Step S23: Investigate the cause of deviation/variation.
Step S24: Produce a report.
In case the deviation(s), score, etc. is/are not within the predetermined range(s), the report may include an indication that the used material data (including rheological data) is valid, and/or the model of the mould and/or the moulding process is valid. Further, the real-world measurement data S16 and/or the virtual world measurement data S26 may be used, as described above, for predicting properties of plastic products produced from the same plastic material as the test specimen.
In case the deviations or scores are not within the predetermined range(s), the report may include the cause of variation obtained as a result of investigation in step S23.

The method may then end.

As described above, the computational aspects described herein can be implemented in digital electronic circuitry, or in computer hardware, firmware, software, or in combinations of them. When appropriate, aspects of these systems and techniques can be implemented in a computer program product, for example tangibly embodied in a machine-readable storage device for execution by a programmable processor; and method steps can be performed by a programmable processor executing a program of instructions to perform functions by operating on input data and generating an output.

To provide for interaction with a user, a computer system can be used having a display device, such as a monitor or a LCD screen for displaying information to the user and a keyboard, a pointing device such as a mouse or a trackball, a touch-sensitive screen, or any other device by which the user may provide input to computer system. The computer system can be programmed to provide a graphical user interface through which the computer program(s) interact(s) with the user.

A number of examples have been described. Nevertheless, it will be understood that various modifications may be made. For example, the method steps described can be performed in a different order and still achieve desirable results. Further, other designs of test specimens enabling generation of measurement data are possible, such as measurement data required to be included in an appropriate materials data space or a rheological data set. Still further, the types, numbers, dimensions and/or arrangement of the spatial features may differ from those described in connection with the above examples. Further, the obtained measurement data by performing a real-world measurement on at least one (real) test specimen and/or a virtual measurement on a model of the test specimen may be used for other technical purposes and in other methods than the one described above, in particular in connection with Fig. 9. Accordingly, other embodiments are within the scope of the claims.

### List of Reference Numerals

- 1: test specimen
- 10: plate body
- 102: first major surface of the plate body
- 104: second major surface of the plate body
- 106: side surface of the plate body
- 12A: cylindrical through hole
- 12B: cuboid through hole
- 14A: transversal rib
- 14B: longitudinal rib
- 20A, 20B: extension tab
- 202A: first major surface of the extension tab 20A
- 204A: second major surface of the extension tab 20A
- 202B: first major surface of the extension tab 20B
- 204B: second major surface of the extension tab 20B
- S1 - S8: sensor zones
- MF: material feed direction
- A-G: shrinkage measurement points
- L1 - L3: lines for measuring side length of the plate body
- d: maximum flatness depth
- w1, w2: weldline length
- S11 - S24:: Method steps

## Claims

1. A test specimen (1) for rheological testing of plastic products comprising:
a plate body (10) from a plastic material, said plate body (10) having a first major surface (102), a second major surface (104) opposite to the first major surface (102) and a side surface (106) connecting the first and the second major surface (104); and
at least one spatial feature (12A, 12B, 14A, 14B) arranged in or on the plate body (10), each spatial feature (12A, 12B, 14A, 14B) indicative of a defect occurring in the plastic products and/or a geometric feature of the plastic products.

2. The test specimen (1) according to claim 1, wherein the at least one spatial feature (12A, 12B, 14A, 14B) is at least one of the following spatial features:
a rib (14A, 14B) extending from the first major surface (102) of the plate body (10);
a through opening (12A, 12B) formed in the plate body (10);
a recess formed in the first major surface (102) of the plate body (10);
a projection extending from the first major surface (102) of the plate body (10).

3. The test specimen (1) according to claim 1 or 2, wherein the test specimen (1) comprises at least one first group comprising at least two spatial features, wherein the at least two spatial features in the group are ribs (14A, 14B) extending from the first major surface (102) of the plate body (10) and arranged substantially parallel to each other.

4. The test specimen (1) according to any one of the preceding claims, comprising a second group comprising at least two spatial features, wherein the at least two spatial features in the second group are through openings (12A, 12B) formed in the plate body (10), said through openings (12A, 12B) having different cross-sectional sizes and/or forms.

5. The test specimen (1) according to any one of the preceding claims, further comprising at least one extension tab (20A, 20B) extending from one side of the side surface of the plate body (10), the at least one extension tab (20A, 20B) having a plate form with a constant thickness.

6. The test specimen (1) according to any one of the preceding claims, further comprising
a plurality of measurement points (A - G) or zones for acquisition of data for determining at least one rheological material property, wherein the at least one rheological material property optionally includes one or more of the following properties: thickness change, directional differential shrinkage, geometric warpage, sinkage size, location and/or depth.

7. The test specimen (1) according to any one of the preceding claims further comprising at least one sensor indicator (S1 - S7) arranged on the second major surface (104) of the plate body (10), each sensor indicator (S1 - S7) identifying a set of measurement data of at least one physical property acquired during manufacturing of the test specimen (1) by a sensor arranged at a position corresponding to the spatial position of the respective sensor indicator.

8. The test specimen (1) according to claim 7, comprising a plurality of sensor indicators (S1 - S7), said plurality of sensor indicators (S1 - S7) including:
a first group of sensor indicators (S1 - S4) arranged along a substantially straight line parallel to a first side of the plate body (10); and/or
a second group of sensor indicators (S6, S7; S4, S5) arranged along a substantially straight line parallel to a second side of the plate body (10) orthogonal to the first side.

9. The test specimen (1) according to any one of the preceding claims, wherein the test specimen (1) is an injection moulded test specimen.

10. A method for testing of a plastic product, comprising
obtaining a test specimen (1) according to any one of the preceding claims or a model of the test specimen according to any one of the preceding claims, wherein the test specimen (1) is of the same plastic material as the tested plastic product and is optionally manufactured according to a manufacturing process having the same process parameters as the tested plastic product;
performing a measurement of at least one rheological property of the test specimen (1), thereby obtaining a set of measurement data and/or performing a virtual measurement of at least one rheological property using the model of the test specimen (1), thereby obtaining a set of virtual measurement data; and
determining at least one property of the tested plastic product based on the obtained set of measurement data and/or set of virtual measurement data.

11. A system for testing of a plastic product, comprising:
a test specimen (1) obtaining unit configured to obtain a test specimen according to any one of claims 1 to 9 or a model of the test specimen (1) according to any one of claims 1 to 9, wherein the test specimen (1) is of the same plastic material as the tested plastic product and is optionally manufactured according to a manufacturing process with the same process parameters as the tested plastic product;
a measurement unit configured to perform a measurement of at least one rheological property of the test specimen (1), thereby obtaining a set of measurement data and/or to perform a virtual measurement of at least one rheological property of the model of the test specimen (1), thereby obtaining a set of virtual measurement data; and
a test property determination unit configured to determine at least one property of the tested plastic product based on the obtained set of measurement data and/or the obtained set of virtual measurement data.

12. A method for validating a rheological data set comprising at least one rheological characteristic of a plastic material and corresponding manufacturing process parameters, comprising:
manufacturing a test specimen (1) according to any one of the claims 1 to 9, wherein the test specimen (1) is manufactured from a plastic material having rheological characteristics as provided by the rheological data set and is manufactured by a manufacturing process having manufacturing process parameters as provided by the rheological data set;
performing a measurement of at least one rheological characteristic of the test specimen (1), thereby obtaining a first data set comprising at least one measurement value of the at least one measured rheological characteristic of the test specimen (1);
performing a virtual rheological measurement of the at least one rheological characteristic of a model of the test specimen (1) generated using the rheological data set, thereby obtaining a second data set comprising at least one virtual measurement value of the at least one rheological characteristic of the test specimen (1), wherein the model of the test specimen (1) is generated by a simulation using the same plastic material characteristics and the same manufacturing process parameters as used for the manufacturing of the test specimen (1);
determining a deviation between the measurement values contained in the first data set and the second data set; and
determining whether the rheological data set is valid or invalid based on the determined deviation.

13. A system for validating a rheological data set comprising at least one rheological characteristic of a plastic material and corresponding manufacturing process parameters, comprising:
a test specimen manufacturing unit configured to manufacture a test specimen (1) according to any one of the claims 1 to 9, wherein the test specimen (1) is manufactured from a plastic material having rheological characteristics as provided by the rheological data set and is manufactured by a manufacturing process having manufacturing process parameters as provided by the rheological data set;
a measurement unit configured to perform a measurement of at least one rheological characteristic of the test specimen (1), thereby obtaining a first data set comprising at least one measurement value of the at least one measured rheological characteristic of the test specimen (1);
a virtual measurement unit configured to perform a virtual rheological measurement of the at least one rheological characteristic of a model of the test specimen (1) generated using the rheological data set, thereby obtaining a second data set comprising at least one virtual measurement value of the at least one rheological characteristic of the test specimen (1), wherein the model of the test specimen (1) is generated by a simulation using the same plastic material characteristics and the same manufacturing process parameters as used for the manufacturing of the test specimen (1); and
a validation unit configured to determine a deviation between the measurement values contained in the first data set and the second data set and to determine, whether the rheological data set is valid or invalid based on the determined deviation.

14. A method for validation of a model of a process for manufacturing of plastic products, comprising:
manufacturing a test specimen (1) according to any one of the claims 1 to 9, wherein the test specimen (1) is manufactured from a plastic material by a manufacturing process having a set of manufacturing process parameters as provided by the model;
performing a measurement of at least one rheological characteristic of the test specimen (1), thereby obtaining a first data set comprising at least one measurement value of the at least one measured rheological characteristic of the test specimen (1);
performing a virtual rheological measurement of the at least one rheological characteristic of a model of the test specimen (1) generated using the rheological data set, thereby obtaining a second data set comprising at least one virtual measurement value of the at least one rheological characteristic of the test specimen (1), wherein the model of the test specimen (1) is generated using the same plastic material characteristics and the same manufacturing process parameters that are used for the manufacturing of the test specimen (1);
determining a deviation between the measurement values contained in the first data set and the second data set; and
determining whether the model is valid or invalid based on the determined deviation.

15. A system for validation of a model of a manufacturing process for plastic products, comprising:
a test specimen manufacturing unit configured to manufacture a test specimen (1) according to any one of the claims 1 to 9, wherein the test specimen (1) is manufactured from a plastic material by a manufacturing process having a set of manufacturing process parameters;
a measurement unit configured to perform a measurement of at least one rheological characteristic of the test specimen (1), thereby obtaining a first data set comprising at least one measurement value of the at least one measured rheological characteristic of the test specimen (1);
a virtual measurement unit comprising at least one processor, configured to perform a virtual rheological measurement of the at least one rheological characteristic of a model of the test specimen (1) generated using the rheological data set, thereby obtaining a second data set comprising at least one virtual measurement value of the at least one rheological characteristic of the test specimen (1), wherein the model of the test specimen (1) is generated using the same plastic material characteristics and the same manufacturing process parameters that are used for the manufacturing of the test specimen (1); and
a validation unit comprising at least one processor, configured to determine a deviation between the measurement values contained in the first data set and the second data set and to determining whether the model is valid or invalid based on the determined deviation.

16. A computer implemented method for determining at least one property of a plastic product to be manufactured and/or of a manufacturing process for a plastic product to be manufactured, comprising:
obtaining reference data of a plurality of reference plastic products, wherein the reference data comprises at least one property of each of the reference plastic products, and wherein said reference data is obtained by testing each of said plurality of reference plastic products according to the method of claim 10, and
determining at least one property of the evaluated plastic product and/or at least one parameter of the evaluated manufacturing process based on the reference data.

17. A computer system for determining at least one property of a plastic product to be manufactured and/or of a manufacturing process for a plastic product to be manufactured:
reference data acquisition unit configured to obtain reference data of a plurality of reference plastic products, wherein the reference data comprises at least one property of each of the reference plastic products, wherein said reference data is obtained by testing each of said plurality of reference plastic products according to the method of claim 10, and
property determination unit configured to determine at least one property of the evaluated plastic product and/or at least one parameter of the evaluated manufacturing process based on the reference data.

18. A method for manufacturing a plastic product, comprising:
determining at least one property of the evaluated plastic product and/or at least one parameter of the evaluated manufacturing process according to the method of claim 16, said at least one property of the evaluated product including a plastic material for the plastic product to be manufactured; and
manufacturing the plastic product from the determined plastic material and/or by a manufacturing process with the determined at least one parameter.

19. A system for manufacturing a plastic product, comprising:
a computer system for determining at least one property of a plastic product to be manufactured and/or of a manufacturing process for a plastic product to be manufactured according to claim 17, said at least one property of the evaluated product including a plastic material for the plastic product to be manufactured; and
a manufacturing unit configured to manufacture the plastic product from the determined plastic material and/or by a manufacturing process with the determined at least one (optimal) parameter.
